Europäisches Patentamt

European Patent Office

Office européen des brevets

(11) Veröffentlichungsnummer: **0 186 886 B1**

(12) **EUROPÄISCHE PATENTSCHRIFT**

(45) Veröffentlichungstag der Patentschrift: **11.03.92**

(21) Anmeldenummer: **85116438.4**

(22) Anmeldetag: **21.12.85**

(51) Int. Cl.5: **B62D 59/04**, B62D 53/06

(54) **Sattelzug.**

(30) Priorität: **22.12.84 DE 3447094**
**13.07.85 DE 3525027**
**02.08.85 DE 3527771**

(43) Veröffentlichungstag der Anmeldung:
**09.07.86 Patentblatt 86/28**

(45) Bekanntmachung des Hinweises auf die
Patenterteilung:
**11.03.92 Patentblatt 92/11**

(84) Benannte Vertragsstaaten:
**AT BE CH DE FR GB IT LI NL**

(56) Entgegenhaltungen:
**DE-A- 1 816 289       DE-A- 3 212 893**
**DE-U- 7 330 872       DE-U- 8 337 467**
**US-A- 3 227 470       US-A- 3 791 664**
**US-A- 4 049 289**

(73) Patentinhaber: **Emil Dautel GmbH**
**Postfach 30 Dieselstrasse 33**
**W-7105 Leingarten(DE)**

(72) Erfinder: **Pfaff, Berthold**
**Danziger Strasse 7**
**W-7105 Leingarten(DE)**
Erfinder: **Dautel, Helmut**
**Augelbaumstrasse 72**
**W-7105 Leingarten(DE)**
Erfinder: **Wittmann, Hans Joachim**
**Sudetenstrasse 8**
**W-7105 Leingarten(DE)**

(74) Vertreter: **Clemens, Gerhard**
**Patentanwaltskanzlei Müller und Clemens**
**Lerchenstrasse 56**
**W-7100 Heilbronn(DE)**

**Beschreibung**

Die Erfindung betrifft einen Sattelzug mit einer Zugmaschine und einem mit dieser über eine Kupplung verbundenen Auflieger, sowie einer Belastungseinrichtung zum Erhöhen der Belastung einer Antriebsachse.

STAND DER TECHNIK

Aus der US-A-3,791,664 ist ein Sattelzug mit einer Verriegelungseinrichtung und einer Belastungseinrichtung bekannt. Im verriegelten Zustand sind die Fahrgestelle von Zugmaschine und Auflieger fest miteinander verbunden. Die angetriebenen Hinterräder der Zugmaschine sind in diesem Zustand durch die Belastungseinrichtung vom Zugmaschinenfahrgestell wegdrückbar. Die Belastungseinrichtung ermöglicht es, daß die Belastung auf der angetriebenen Hinterachse für das Fahren auf ebenem Grund optimal eingestellt werden kann. Fährt ein derartiger Zug jedoch in sehr unebenem Gelände mit größeren Bodenwellen und Senken, ist die Belastungseinrichtung nicht mehr dazu in der Lage, größere Höhenunterschiede so weit überbrücken zu können, daß die Hinterräder dauernd mit der gewünschten Belastung auf den Boden drücken.

Aus der US-A-3,580,609 ist ein nicht verriegelbarer Sattelzug mit einer zwischen den Fahrgestellen von Zugmaschine und Auflieger wirkenden Belastungseinrichtung bekannt. Die Belastungseinrichtung ist durch eine Luftbalganordnung gegeben, deren unteres Ende mit dem Zugmaschinenfahrgestell und deren oberes Ende mit einer Gleitplatte verbunden ist, auf der das Aufliegerfahrgestell gleitet. Dadurch, daß Zugmaschine und Auflieger nicht verriegelt sind, ist es möglich, daß die Fahrgestelle beim Durchfahren einer Bodenunebenheit gegeneinander abknicken, so daß die angetriebenen Hinterräder der Zugmaschine dauernd mit in etwa gleicher Belastung auf den Untergrund aufdrücken. Die fehlende Verriegelungsmöglichkeit bringt jedoch nicht nur den geschilderten Vorteil mit sich, sondern auch den Nachteil, daß der Zug im Gelände schlechter manövrierbar ist als der eingangs genannte verriegelbare Zug.

Ein nicht verriegelbarer Zug mit Belastungseinrichtung ist weiterhin aus der DE-C-930 725 bekannt. Durch einen vom Ende des Zugmaschinenfahrgestells ausfahrbaren Stempel ist das Aufliegerfahrgestell vom Zugmaschinenfahrgestell wegdrückbar. Diese Belastungseinrichtung ist jedoch so aufgebaut, daß sie nur innerhalb geringer Winkeländerungen zwischen den Fahrgestellen elastisch wirkt. Fährt der Zug auf stark unebenem Grund, ändert sich die Belastung auf den angetriebenen Hinterrädern der Zugmaschine stark.

Ein Zug, bei dem Zugmaschine und Auflieger beim Zusammenkuppeln gleichzeitig so gegeneinander verriegelt werden, daß Schwenkungen des Aufliegers um die durch die Kupplung gehende senkrechte Hochachse ausgeschlossen sind, ein Verdrehen um die Querachse jedoch noch möglich ist, ist aus dem DE-U-73 30 872 bekannt. Damit der Zug trotz der Verriegelung um die Hochachse noch manövrierbar bleibt, ist außer der Vorderachse des Zuges mindestens noch eine weitere Achse lenkbar. Aus der Beschreibungseinleitung des genannten Gebrauchsmusters und aus dem DE-U-83 37 467 sind weiterhin Züge mit während der Fahrt wahlweise betätigbarer Verriegelungseinrichtung in bezug auf Relativbewegungen um die Hochachse beschrieben. Auch hier ist es möglich, im verriegelten Zustand außer der Vorderachse eine weitere Achse zu lenken.

Eine Möglichkeit zum Verbessern der Manövrierbarkeit von Sattelzügen besteht auch darin, die Räder einer Aufliegerachse an einem Auflieger mit mindestens zwei Achsen vom Boden abzuheben. Ein derart ausgebildeter Zug ist aus dem DE-U-80 06 759 bekannt.

DARSTELLUNG DER ERFINDUNG

Der Erfindung liegt die Aufgabe zugrunde, einen Sattelzug der eingangs genannten Art anzugeben, der auch bei Fahrten im Gelände gut manövrierbar ist und eine auf angetriebenen Rädern eingestellte Last auch beim Fahren über Unebenheiten im wesentlichen beibehält.

Diese Aufgabe ist durch die Gruppe der Erfindungen gemäß den Merkmalen der Ansprüche 1, 2 bzw. 4 gegeben. Alle Züge dieser Gruppe besitzen sowohl eine Kupplung zwischen Zugmaschine und Auflieger, die ein gegenseitiges Verschwenken von Zugmaschine und Auflieger zumindest um die Querachse zuläßt, als auch eine Belastungseinrichtung zum Einstellen der Belastung der Antriebsräder des Sattelzuges.

Beim Sattelzug gemäß Anspruch 1 greift die Belastungseinrichtung an mindestens einer von der Kupplung in Fahrtrichtung entfernten Stelle elastisch zwischen dem Zugmaschinenfahrgestell und dem Aufliegerfahrgestell an. Die Verriegelungseinrichtung ist so ausgebildet, daß sie zwar ein Verschwenken des Aufliegers um die Hochachse verriegelt oder zumindest begrenzt, die Beweglichkeit um die Querachse jedoch nicht einschränkt.

Der Sattelzug gemäß Anspruch 2 weist mindestens zwei Aufliegerachsen auf, von denen zumindest eine eine nichtentlastbare Achse ist. Die Belastungseinrichtung ist dadurch gegeben, daß zumindest eine der restlichen Aufliegerachsen eine durch eine Entlastungseinrichtung entlastbare Achse ist. Es liegt weiter eine Verriegelungseinrichtung vor, die die Relativbewegung von Zugmaschine und Auflieger in bezug auf die Hochachse ganz oder zumindest teilweise beschränkt, die Beweglichkeit um die Querachse jedoch nicht einschränkt.

Der Sattelzug gemäß Anspruch 4 weist mindestens zwei Antriebsachsen und mindestens zwei Belastungseinrichtungen zum Einstellen der Belastungen der Antriebsachsen auf.

Die Merkmale der Sattelzüge gemäß den nebengeordneten Ansprüchen 1, 2 und 4 können miteinander kombiniert werden, wodurch sich eine Vielzahl von Vorteilen an einem einzigen Zug gemeinsam erzielen läßt.

Der Sattelzug gemäß Anspruch 1 hat den Vorteil, daß er bei betätigter Verriegelungseinrichtung gut manövrierbar ist und dennoch die Belastungseinrichtung auch bei Fahrt in sehr unebenem Gelände ihre Kraft dauernd elastisch ausüben kann. Die Verriegelungseinrichtung, die die Verschwenkung um die Querachse nicht einschränkt, läßt nämlich ein gegenseitiges Verschwenken der beiden Fahrgestelle auch bei Fahrt in sehr unebenem Gelände zu. Das gegenseitige Verschwenken der Fahrgestelle führt zu einer Abstandsänderung der Fahrgestelle. Diese Abstandsänderung ist jedoch aufgrund der geometrischen Verhältnisse erheblich geringer als es die Abstandsänderung einer angetriebenen Achse von einem durchgehend starren Fahrwerk beim Fahren durch dieselben Unebenheiten wäre. Da die Belastungseinrichtung nicht mehr, wie bei dem verriegelbaren und belastbaren Zug gemäß der US-A-3,791,664 die angetriebene Hinterachse vom Zugmaschinenfahrgestell wegdrückt, sondern da sie zwischen den Fahrgestellen wirkt, hat sie nur noch innerhalb der kleinen Wegänderung zwischen den Fahrgestellen für das Einhalten einer elastischen Kraft zu sorgen. Dies ist konstruktiv erheblich einfacher erzielbar als das Erzielen einer elastischen Kraft auf eine Hinterachse an einem durchgehend starren Fahrgestell.

Der Sattelzug gemäß Anspruch 2 ist gut manövrierbar, da er verriegelbar ist, und da er eine entlastbare Aufliegerachse aufweist. Die Räder der entlasteten Achse können leicher als die Räder einer voll belasteten Achse auf dem Untergrund seitlich verschoben werden. Werden die Räder der entlastbaren Achse ganz geliftet, also wird die Achse völlig entlastet, ist nicht mehr einmal ein seitliches Verschieben bei Kurvenfahrt erforderlich. Das Entlasten der entsprechend ausgebildeten Aufliegerachse führt aber nicht nur zu einem Erhöhen der Manövrierbarkeit, sondern auch zu einem Erhöhen der Belastung auf angetriebenen Rädern. Dadurch ist die Manövrierbarkeit des verriegelbaren Zuges noch weiter verbessert. Der Zug kann sich nämlich noch auf relativ tiefem Untergrund aus eigener Kraft fortbewegen, da er eine sehr hohe Kraft auf die angetriebenen Räder bringen kann. Dadurch, daß ein Teil der Räder angehoben oder zumindest entlastbar ist, ziehen diese Räder keine gesonderte Spur mehr im Untergrund, was ebenfalls dem erleichterten Fortkommen auf schwerem Boden dient. Obwohl der Auflieger weniger Spuren zieht, führt dies trotzdem nicht zu seitlichem Wegrutschen auf schmierigem Grund, da der Zug verriegelbar ist. Die Merkmale des Verriegelns und des Entlastens der Räder einer Aufliegerachse ergänzen sich also in mehrfacher Hinsicht zum Erzielen besonderer Vorteile.

Handelt es sich bei einer Ausführungsform eines Zuges gemäß Anspruch 2 um einen Vier-Achs-Zug mit einer lenkbaren Vorderachse, einer angetriebenen Hinterachse, einer nichtentlastbaren, starren vorderen Aufliegerachse und einer entlastbaren, im Grenzfall liftbaren hinteren Aufliegerachse, ist Kurvenfahrt unproblematisch. Dies ändert sich jedoch dann, wenn noch mehrere Achsen vorliegen, oder wenn bei einem Vier-Achs-Zug die Anordnung der beiden Aufliegerachsen gegenüber dem soeben genannten Beispiel vertauscht ist. In diesem Fall ist es von Vorteil, die Manövrierbarkeit dadurch weiter zu erhöhen, daß zumindest eine der nichtentlastbaren Aufliegerachsen eine Lenkachse ist. Die Lenkachse kann eine Nachlaufachse sein. Durch die Kombination der lenkbaren mit der entlastbaren Achse ist die Notwendigkeit umgangen, zwei lenkbare Achsen am Auflieger anzubringen. Sattelzüge mit einer entlastbaren Aufliegerachse und einer lenkbaren Aufliegerachse in Kombination sind im Stand der Technik nicht bekannt.

Der Sattelzug gemäß Anspruch 4 ist aufgrund seiner mindestens zwei Belastungseinrichtungen für mindestens zwei Antriebsachsen besonders gut manövrierbar. Durch die zwei Belastungseinrichtungen wird die Erkenntnis genutzt, daß es in der Praxis selten vorkommt, daß ein Sattelzug im Gelände mit allen Rädern gleichzeitig auf sehr tiefem Grund steht, daß es also i. d. R. möglich ist, daß sich das Fahrzeug noch mit eigener Kraft selbst weiterbewegen kann, wenn nur gerade diejenigen Räder angetrieben werden können, die noch auf ausreichend festem Grund stehen. Diese Erkenntnis hat bereits vor längerem zum Entwickeln von Zugmaschinen mit Allradantrieb geführt. Jedoch ist der Allradantrieb öfters nicht nutzbar, nämlich dann, wenn eine ungünstige Achslastverteilung dahingehend vorliegt, daß gerade diejenigen Räder, die sich auf festem Grund befinden, kaum belastet werden.

Dieser Mangel ist bei Sattelzügen gemäß dem Anspruch 4 behoben. Durch die zwei unabhängig voneinander einstellbaren Belastungseinrichtungen kann jeweils diejenige angetriebene Achse maximal belastet werden, deren Räder noch auf festem Grund stehen. Es läßt sich auch Erzielen, daß ein möglichst goßer Anteil des Gesamtgewichtes auf den Antriebsachsen lastet, so daß sich ein hohes Verhältnis von Gewicht auf den Antriebsachsen zu Gesamtgewicht, d. h. ein hoher Traktionswert einstellen läßt.

Von besonderem Vorteil ist es, wenn die Belastungseinrichtungen unabhängig voneinander verstellbar sind. Dies sei an zwei Beispielen erläutert, von denen das erste einen Zug mit zwei Belastungseinrichtungen betrifft, die nicht unabhängig voneinander verstellbar sind. Die erste Belastungseinrichtung sei vor der Kupplung zum Auseinanderdrücken der Fahrgestelle von Zugmaschine und Auflieger angeordnet. Die andere Betätigungseinrichtung sei ebenfalls zum Auseinanderdrücken der Fahrgestelle ausgebildet, jedoch hinter der Kupplung angeordnet Sowohl die Vorderachse wie auch die Hinterachse der Zugmaschine seien antreibbar. Wird die hintere Belastungseinrichtung betätigt, erhöht sich die Belastung auf der Hinterachse, während sich beim Betätigen der vorderen Belastungseinrichtung die Belastung auf der Vorderachse erhöht. Die Bewegung beider Belastungseinrichtungen ist über die Bewegung der über die Kupplung miteinander verbundenen Fahrgestelle miteinander verknüpft. Es ist daher nicht möglich, beide Belastungseinrichtungen unabhängig voneinander zum Erhöhen sowohl der Belastung der Vorderräder wie auch der Belastung der Hinterräder zu verstellen.

Dies ist allerdings bei einem Zug möglich, bei dem die erste Belastungseinrichtung zwischen den Fahrgestellen wirkt und die zweite eine Entlastungseinrichtung für die erste Aufliegerachse ist. Es seien wieder die Vorder- und die Hinterachse der Zugmaschine antreibbar. Wird die Aufliegerachse entlastet, führt dies zu einer Belastung der Vorder- und der Hinterachse. Es sei angenommen, daß die erzielbare Belastung so groß ist, daß die Vorderachse überlastet werden könnte. Wird nun aber die zweite Belastungseinrichtung zwischen den Fahrgestellen so betätigt, daß die Hinterachse noch weiter belastet, die Vorderachse aber entlastet wird, so lassen sich an beiden Achsen maximale Belastungen einstellen. Bei dieser Ausführungsform kann die entlastbare Achse unabhängig von der Belastungseinrichtung zwischen den Fahrgestellen verstellt werden und umgekehrt.

Das letzte Ausführungsbeispiel entspricht dann einer Vereinigung der Merkmale aller drei Sattelzüge gemäß den nebengeordneten Ansprüchen 1, 2 und 4, wenn es sich um einen verriegelbaren Zug handelt. Dieser Zug weist alle Vorteile in Gemeinsamkeit auf, die für die verschiedenen Sattelzüge gemäß den Ansprüchen 1, 2 bzw. 4 getrennt vorliegen.

Wie anhand des letzten Beispiels erläutert kann es erforderlich sein, zwei Belastungseinrichtungen geichzeitig zu betätigen (unabhängig davon, ob nur eine Antriebsachse vorliegt oder mehrere), um ein Überlasten einer Achse zu verhindern. Ablaufsteuerungen können auch dann von Vorteil sein, wenn andere Einrichtungen, statt nur Belastungseinrichtungen, in Gemeinsamkeit an einem Sattelzug vorliegen, z. B. eine Verrie gelungseinrichtung, eine Lenkeinrichtung und eine Belastungseinrichtung. Hier ist es von Vorteil, zunächst zu verriegeln und dann in Folge die Belastungseinrichtung und die Lenkeinrichtung freizugeben. Beispiele von Ablaufsteuerungen sind in der Beschreibung enthalten.

Um die Manövrierbarkeit zu verbessern ist es weiter von Vorteil, die Belastungseinrichtungen und/oder die Verriegelungseinrichtungen mit Dämpfungsgliedern, z. B. Stoßdämpfern zu versehen, um unerwüschte Schwingungen des Aufliegers in bezug auf die Zugmaschine zu unterdrücken.

Weiterhin läßt sich die Manövrierbarkeit dadurch erhöhen, daß für angetriebene Räder Gleichlaufüberwachungen oder Schlupfüberwachungen vorliegen. Auch hierfür nennt die Beschreibung Beispiele.

Ein besonders einfacher Aufbau an Zügen mit Belastungs- und Verriegelungseinrichtung ergibt sich dann, wenn eine kombinierte Verriegelungs/Belastungs-Einrichtung vorliegt. Dadurch ergibt sich eine besonders kompakte Konstruktion, die auch nachträglich leicht anbaubar ist. So ist z. B. am Aufliegerfahrgestell lediglich eine Schwinge schwenkbar zu befestigen, die außer an den Anlenkstellen mit dem Aufliegerfahrgestell noch über eine Luftbalganordnung in Verbindung steht. Am hinteren Ede des Zugmaschinenfahrgestells ist eine Aufnahmevorrichtung zu montieren, in die das freie Ende der Schwinge mit einem Eingriffsglied eingreifen kann. Beim Zusammenstellen des Zuges wird der Auflieger mit der Zugmaschine in üblicher Weise zusammengekuppelt. Dann wird der auf die Schwinge wirkende Luftbalg mit Druck beaufschlagt, wodurch die Schwinge verschwenkt und mit ihem Eingriffsglied in die Aufnahmeeinrichtung eingreift. Durch den Druck im Luftbalg ist die Kraft einstellbar, mit der das Eingriffsglied auf die Aufnahmeeinrichtung drückt. Diese Kraft legt wiederum fest, welcher Anteil des Aufliegergewichts auf die Zugmaschine übertragen wird. Entsprechend aufgebaute kombinierte Verriegelungs/Belastungs-Einrichtungen können auch an anderer Stelle des Zuges angeordnet sein, was von der Lage der angetriebenen Achsen abhängt.

Verriegelungseinrichtungen an erfindungsgemäßen Sattelzügen zum gegenseitigen Verriegeln von Zugmaschine und Auflieger in bezug auf ein Verschwenken des Aufliegers um die Hochachse müssen ein derartiges Verschwenken nicht völlig unterbinden. Es ist auch möglich, daß die Verriegelungseinrichtungen die Verschwenkbarkeit auf einen kleinen Winkelbereich aus dem recht großen Winkelbereich von etwa 110 Grad einschränken, der bei nichtverriegelten Zügen zwischen Auflieger und Zugmaschine möglich ist. Auch dann wenn die Verschenkbarkeit nicht voll gesperrt ist, sondern nur auf einen kleinen Winkelbereich beschränkt ist, fördert dies die Manövrierbarkeit im Gelände, wo auf rutschigem Untergrund bei unverriegelten Zügen die Gefahr besteht, daß der Auflieger seitlich wegrutscht, also nicht mehr lenkbar ist.

Sattelzüge gemäß Anspruch 2 und Weiterbildungen und Ausgestaltungen von Anspruch 2 weisen eine als Entlastungseinrichtung ausgebildete Belastungseinrichtung auf. Hier ist zu beachten, daß der Begriff der Belastung sich auf die Last auf Antriebsrädern bezieht. Werden an einem Zug andere Achsen als eine bestimmte Antriebsachse entlastet, führt dies zu einer Lasterhöhung auf dieser Antriebsachse. Das Entlasten der entlastbare Achsen kann so weit gehen, daß diese nicht nur nicht mehr auf den Boden drücken, sondern von diesem auch noch ein Stück abgehoben, also geliftet werden. Ein Belasten kann dann, wenn die Belastungeinrichtung nicht zwischen den Fahrgestellen wirken muß, auch dadurch erfolgen, daß eine Achse vom zugehörigen Fahrgestell weggedrückt wird.

Es soll nicht ausgeschlossen sein, daß auch nicht entlastbare Achsen im Rahmen der üblichen Federwege in gewissen Grenzen höhenverstellbar sind, wie dies insbesondere bei Luftfederung ohne weiteres möglich ist.

KURZE BESCHREIBUNG DER FIGUREN

Fig. 1       Schematische Seitenansicht eines Sattelzuges mit kombinierten Verriegelungs/Belastungs-Einrichtungen;

Fig. 2       schematische Draufsicht auf einen Sattelzug;

Fig. 3       schematische Seitenansicht einer Ausführungsform einer kombinierten Verriegelungs/Belastungs-Einrichtung im Verriegelungszustand;

Fig. 4       schematische Seitenansicht gemäß Fig. 3, jedoch die Einrichtung im entriegelten Zustand darstellend;

Fig. 5       schematische Rückansicht eines wesentlichen Teils der Einrichtung gemäß den Fig. 3 und 4;

Fig. 6       Ansicht gemäß Fig. 5 auf ein in Fig. 5 enthaltenes Führungsteil in einer Ausführung zum Einstellen einer linear anwachsenden Rückstellkraft beim Abknicken des Zuges im verriegelten Zustand;

Fig. 7       Ansicht gemäß Fig. 6, jedoch einer Ausführungsform eines Führungsteiles zum Einstellen einer überlinear anwachsenden Rückstellkraft;

Fig. 8       schematische Seitenansicht eines Sattelzuges zum Erläutern von an diesem Zug wirkenden Kräften zum Belasten der Hinterräder der Zugmaschine;

Fig. 9       schematische Seitenansicht gemäß Fig. 8, jedoch betreffend Kräfte zum Belasten der Vorderräder der Zugmaschine und der Räder des Aufliegers;

Fig. 10       schematische Teilseitenansicht einer konkreten Ausführungsform zum Durchführen des anhand von Fig. 9 erläuterten Prinzips;

Fig. 11 und 12       schematische Seitenansichten zweier weiterer Ausführungsformen kombinierter Verriegelungs/Belastungs-Einrichtungen;

Fig. 13       schematische Teilseitenansicht einer Ausführungsform mit einer von der Kupplung eines Sattelzuges angeordneten kombinierten Belastungs/Verriegelungs-Einrichtung;

Fig. 14       schematische Seitenansicht eines Sattelzuges mit einer kombinierten Verriegelungs/Belastungs-Einrichtung in nicht verriegeltem Zustand und einem Zweiachs-Auflieger mit Liftachse in nicht angehobenem Zustand;

Fig. 15       schematische Seitenansicht gemäß Fig. 14, jedoch mit verriegelter Verriegelungs/Belastungs-Einrichtung und angehobener Liftachse;

Fig. 16       schematische Draufsicht auf einen Sattelzug im verriegelten, gelenkten Zustand;

Fig. 17       schematische Seitenansicht eines Sattelzuges, bei dem der Auflieger und die Zugmaschine über eine querliegende Kupplungsachse nur um diese Querachse bewegbar miteinander verbunden sind, einer Belastungseinrichtung hinter der Kupplungsachse, einer angetriebenen Zugmaschinen-Hinterachse, sowie einer vorderen angetriebenen und einer hinteren entlastbaren Aufliegerachse;

Fig. 18       schematische Draufsicht auf den Zug gemäß Fig. 17;

Fig. 19       schematische Seitenansicht eines Zuges ähnlich dem gemäß Fig. 17, jedoch mit einer Verriegelungs/Belastungs-Einrichtung für wahlweise Verriegelung von Zugmaschine und Auflieger; und

Fig. 20       schematische Draufsicht auf die Verriegelungs/Belastungs-Einrichtung am Zug gemäß Fig. 19.

WEGE ZUM AUSFÜHREN DER ERFINDUNG

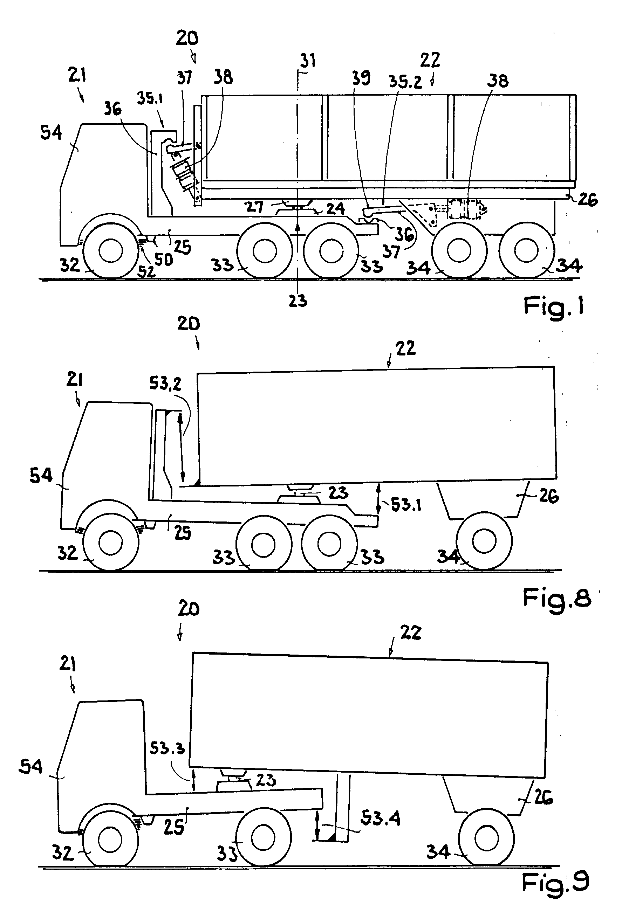

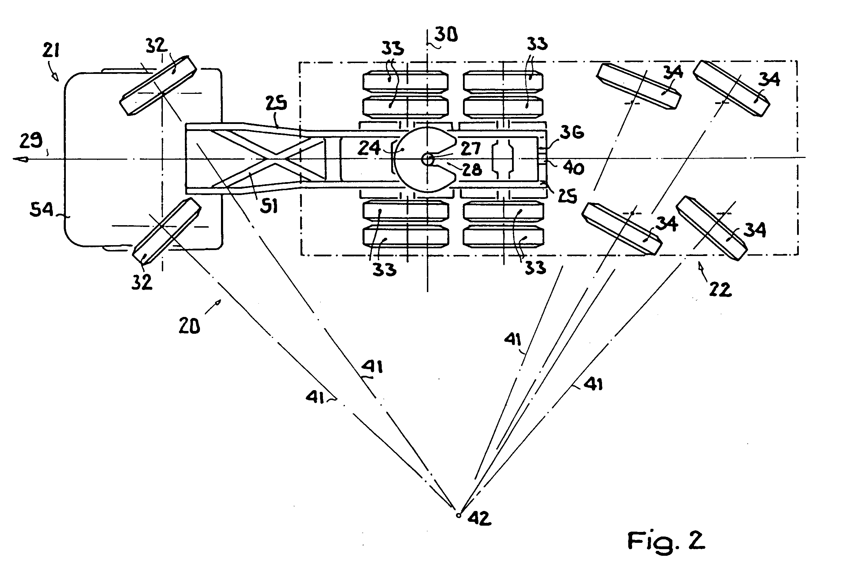

Der Sattelzug 20 gemäß Fig. 1 besteht aus einer Zugmaschine 21 und einem Auflieger 22. Beide stehen miteinander über eine Kupplung 23 in Verbindung, bei der es sich um eine übliche Sattelzugkupplung handelt, mit einem in Fig. 2 erkennbaren Kupplungsteil 24, das am Zugmaschinen-Fahrgestell 25 montiert ist und mit einem am Auflieger-Fahrgestell 26 montierten Königszapfen 27, der durch einen Einführschlitz 28 in das Kupplungsteil 24 geführt wird und dort mit diesem verriegelt wird. Der Königszapfen 27 verläuft durch den Kreuzungspunkt zwischen der Längsachse 29, die in Fahrtrichtung der Zugmaschine 21 liegt, einer rechtwinklig zur Längsachse, parallel zu den Fahrgestellebenen liegenden Querachse 30 und einer rechtwinklig zur Längsachse und zur Querachse stehenden Hochachse 31, um die herum die Zugmaschine und der Auflieger um einen relativ großen Winkel verschwenkt werden können, was regelmäßig bei Kurvenfahrt auftritt. Das Kupplungsteil 24 läßt auch ein Verschwenken um einen geringen Winkel um die Querachse 30 zu. Die Zugmaschine 21 weist eine Vorderachse mit Vorderrädern 32 und zwei Hinterachsen mit angetriebenen Hinterrädern 33 auf. Der Auflieger 22 verfügt ebenfalls über zwei Achsen mit Aufliegerrädern 34.

Der Sattelzug 20 verfügt weiterhin über zwei kombinierte Verriegelungs/Belastungs-Einrichtungen 35, nämlich eine vordere solche Einrichtung 35.1 und eine hintere solche Einrichtung 35.2. Jede der beiden Einrichtungen 35.1 und 35.2 verfügt über eine am Zugmaschinen-Fahrgestell 25 montierte Aufnahmeeinrichtung 3, sowie über einen am Auflieger-Fahrgestell 26 montierten Schwenkarm 37, der jeweils über Luftfederbälge 38 so verschwenkbar ist, daß ein Eingriffsglied 39 mit einer Aufnahmeaussparung 40 der Aufnahmeeinrichtung 36 in oder außer Eingriff bringbar ist.

In Fig. 1 greifen die Eingriffsglieder 38 nicht in die Aufnahmeaussparungen 40 ein; der Zug befindet sich also im entriegelten Zustand. Bei Fig. 2 ist dagegen der verriegelte Zustand vorausgesetzt, was im folgenden erläutert wird.

Dann, wenn die Eingriffsglieder 39 in die jeweils zugehörige Aufnahmeaussparung 40 eingreifen, ist ein Verschwenken des Aufliegers 22 um die Hochachse 31 nicht mehr möglich. Es ist dann ein in bezug auf diese Schwenkrichtung starres Lastfahrzeug gebildet. Dieses Fahrzeug ist recht lang und verfügt über mehrere Achsen. Wenn in diesem Fall nur die Vorderachse lenkbar ist, können sich Schwierigkeiten bei Kurvenfahrten ergeben. Das dargestellte, fünfachsige Fahrzeug verfügt daher über lenkbare Aufliegerräder 34. Diese Aufliegerräder sind im entriegelten Zustand gemäß Fig. 1 in ihrer Nullage gesperrt, da ansonsten die Gefahr bestünde, daß der Auflieger 22 unter Drehung um die Hochachse 31 ausbricht. In dem in Fig. 2 vorausgesetzten verriegelten Zustand sind dagegen die Aufliegerräder 34 lenkbar, um problemlose Kurvenfahrt des langen, fünfachsigen Fahrzeugs zu ermöglichen. Die Radachsen 41 der gelenkten Vorderräder 32 und der gelenkten Aufliegerräder 34 gehen alle durch den Kurvenmittelpunkt 42.

Anhand der Fig. 2 - 5 wird nun ein konkretes Ausführungsbeispiel einer Verriegelungs/Belastungs-Einrichtung 35 beschrieben. Bei der Aufnahmeeinrichtung 36 handelt es sich um einen einfachen Träger, der quer zur Fahrtrichtung am hinteren Ende des Zugmaschinen-Fahrgestells 25 in Richtung der Querachse 30 montiert ist, was aus Fig. 2 besonders gut ersichtlich ist.

Die trägerförmige Aufnahmeeinrichtung 36 weist an ihrer Oberseite eine V-förmige Führungsfläche auf, die am tiefsten Punkt des V in die Aufnahmeaussparung 40 mündet.

Der Schwenkarm 37 der Verstelleinrichtung ist dreiecksförmig ausgebildet. Der untere Punkt des Dreiecks ist am Auflieger-Fahrgestell 26 in einem Schwenklager 44 schwenkbar angelenkt. Die vordere Spitze des dreiecksförmigen Schwenkarmes 37 trägt ein als Rolle ausgebildetes Eingriffsglied 39. Der hintere obere Punkt des dreiecksförmigen Schwenkarmes 37 ist an ein pneumatisches Stellglied 45 mit zwei Luftbälgen 38 angelenkt. Das pneumatische Stellglied 45 ist seinerseits an seinem anderen, hinteren Ende 46 am Auflieger-Fahrgestell 26 schwenkbar angelenkt.

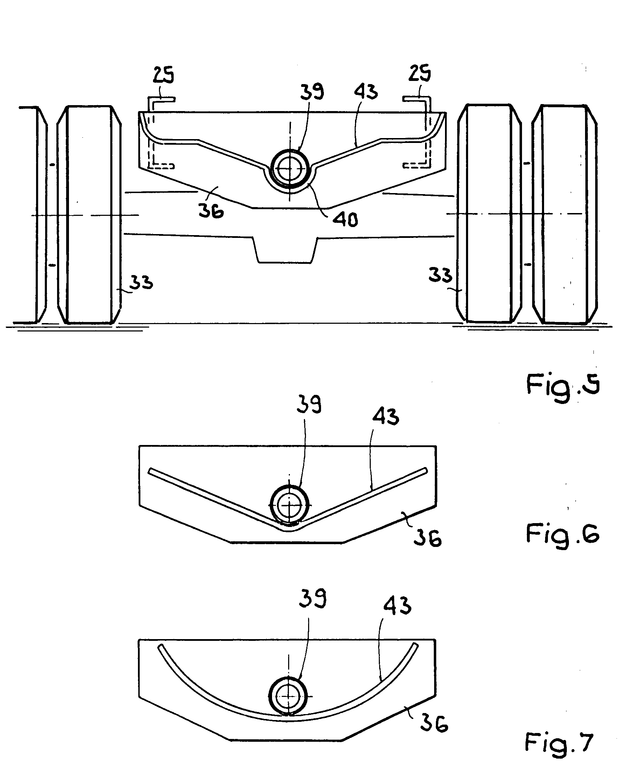

Wenn die Zugmaschine 21 und der Auflieger 22 miteinander verriegelt werden sollen, werden ihre Längsachsen in aller Regel noch nicht genau in derselben Richtung liegen, so daß das Eingriffsglied 39 nicht ohne weiteres in die Aufnahmeaussparung 40 eingreifen kann. Dies stellt bei Verwendung der Aufnahmeeinrichtung 36 gemäß Fig. 5 mit der V-förmigen Führungsfläche 43 allerdings kein Problem dar. Selbst wenn der Auflieger 22 noch etwa +/- 10 Grad um die Zugmaschine 21 verschwenkt ist, setzt das rollenförmige Eingriffsglied 39 nahe einem freien Rand der Führungsfläche 43 auf. Da das Eingriffsglied 39 durch den Schwenkarm 37 mit großer Kraft nach unten gedrückt wird, tritt aufgrund der V-förmigen Ausführung der Führungsfläche 43 eine Kraftkomponente in Richtung des tiefsten Punktes der Führungsfläche 43 also in Richtung zur Aufnahmeaussparung 40 hin auf. Wird dann die Zugmaschine 21 so gelenkt, daß ein Verdrehen von Zugmaschine und Auflieger 22 um die Hochachse 31 erfolgt, nimmt das Eingriffs-

EP 0 186 886 B1

glied 39 schließlich seine tiefste Lage ein, in der die Zugmaschine 31 und der Auflieger 22 gestreckte Lage einnehmen. Treten nun in dieser gestreckten Lage starke Querkräfte auf, ist es von Vorteil, die Verriegelung zwischen Auflieger 22 und Zugmaschine 21 wieder lösen zu können, damit keine Fahrgestellschäden auftreten.

Ein solches Lösen ist beim Verwenden von Aufnahmeeinrichtungen 36 ohne Aufnahmeaussparung 40 gemäß den Fig. 6 und 7 ohne weiteres möglich. Die Zunahme der Rückstellkraft bei Auslenkung ist bei der Ausführungsform gemäß Fig. 6, bei der die Flanken der V-förmigen Führungsfläche 43 linear verlaufen, linear, während die Zunahme der rückstellenden Kraft unter Verwendung der überlinear ansteigenden Flanken bei der Ausführungsform gemäß Fig. 7 überlinear ist.

Seitenkräfte auf die Kupplung 23 lassen sich dadurch leicht vermeiden, daß eine Verriegelungseinrichtung verwendet wird, die auf der Querachse angeordnet ist.

Anhand der Fig. 1, 8 und 9 wird nun erläutert, zu welchen Radbelastungen von einer nicht dargestellten Belastungseinrichtung ausgeübte Kräfte führen. Dabei ist davon ausgegangen, daß die Kräfte auseinanderdrückende Kräfte sein sollen, wie sie durch Luftbälge ausgeübt werden können. Zusammenziehende Kräfte wären nur durch hydraulische oder pneumatische Kolben-Zylinder-Anordnungen erzielbar, die aber den Nachteil haben, daß sie starke und schnelle Verschwenkungen um die Querachse 30 aufgrund von Bodenunebenheiten nicht so gut zulassen, wie die Luftbälge bei denen zum Ausfedern solcher Verschwenkungen keine Luft zu- und abgeführt werden muß, sondern wo die Verschwenkungen allein aufgrund des großen Luftvolumens aufgefangen werden können. Es sind also Luftbälge und damit auseinanderdrückende Kräfte bevorzugt. Es kann jeweils ein einziger großvolumiger Balg, oder es können mehrere in Reihe geschaltete Bälge verwendet werden.

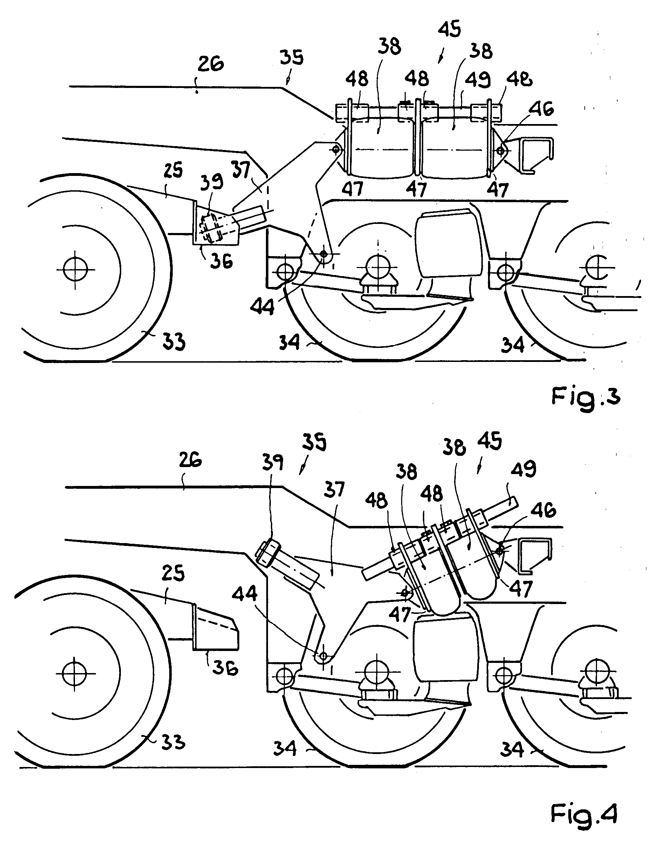

Wirkt eine auseinanderdrückende Kraft 53.1 hinter der Kupplung 23, die an ihrer Wirkungsstelle den Abstand zwischen den beiden Fahrgestellen 25 und 26 vergrößert, läßt sich ein einfacher Aufbau erzielen, wie er anhand der Fig. 3 - 5 erläutert worden ist. An der teuren, vielbenötigten Zugmaschine 21 ist nur eine einfache Aufnahmeeinrichtung 36 zu montieren, während der kompliziertere Teil der gesamten Einrichtung auf den Auflieger 22 beschränkt bleibt. Die Anordnung führt zu einer einstellbaren Andrückkraft der Hinterräder 33 auf den Boden. Dieselbe Verschwenkungsrichtung von Zugmaschine 21 und Auflieger 22 läßt sich, bei größerem baulichem Aufwand, durch eine zusammenziehende Kraft 53.2 vor der Kupplung 23 erzielen.

Soll der Anlagedruck der Vorderräder 32 erhöht werden, sind die beiden Fahrgestelle 25 und 26 so zueinander zu verschwenken, daß sie nach hinten hin aufeinanderzulaufen, daß sie also vor der Kupplung 23 ihren gegenseitigen Abstand vergrössern, während sie ihn dahinter verkleinern. Eine vordere, den Abstand vergrößernde, auseinanderdrückende Kraft 53.3 kann baulich wieder auf einfache Art und Weise erzielt werden, indem eine einfache Aufnahmeeinrichtung 36 gemäß den Fig. 3 -5 am Zugmaschinenfahrgestell 25 montiert wird, und der Rest der Einrichtung entsprechend wie bei den Ausführungsformen 3 und 4 am Auflieger-Fahrgestell 26 montiert wird, nun eben vor der Kupplung 23 statt dahinter. Dieselbe Verschwenkungsrichtung läßt sich, bei größerem baulichen Aufwand, durch eine zusammenziehende Kraft 53.4 hiner der Kupplung 23 erzielen.

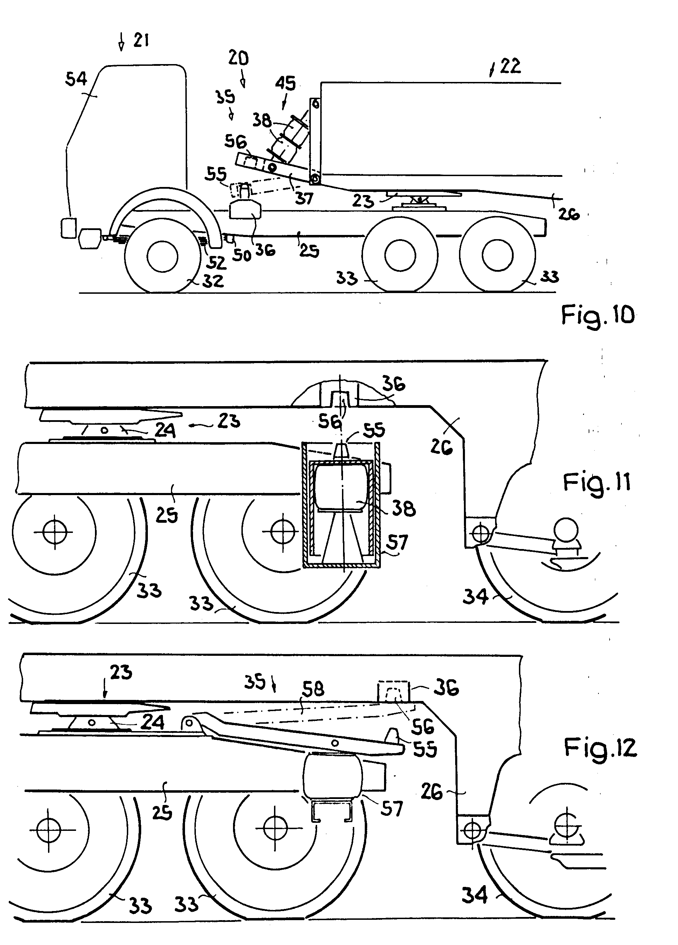

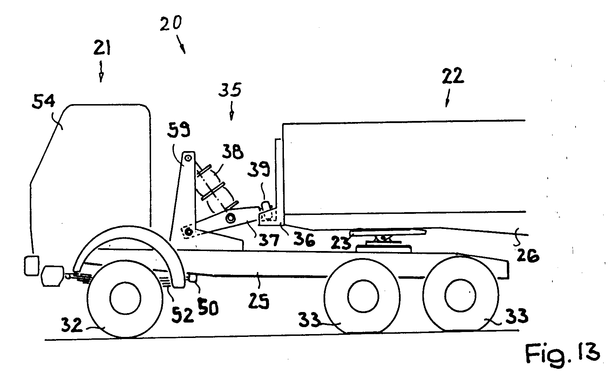

Einfache Ausführungsformen von Verriegelungs/Belastungs-Einrichtungen 35 sind in den Fig. 11 und 12 dargestellt. In beiden Fällen befindet sich eine Aufnahmeeinrichtung 36 mit einer Aussparung 56 unten am Auflieger-Fahrgestell 26 hinter der Kupplung 23. Am hinteren Ende des Zugmaschinen-Fahrgestelles 25 ist jeweils ein Luftfederbalg 38 angeordnet. Bei der Ausführungsform gemäß Fig. 11 läuft der Luftfederbalg 38 in einer Kolben-Zylinder-Anordnung 57. An seinem oberen Ende trägt der Luftfederbalg 38 einen Zapfen 55, der in ausgefahrenem Zustand der Anordnung 57 in die Aussparung 56 der Aufnahmeeinrichtung 36 eingreift.

Die Einrichtung gemäß Fig. 12 ist kompakter. Es liegt wiederum eine Kolben-Zylinder-Anordnung 57 vor, die auf eine am hinteren Ende des Zugmaschinen-Fahrgestells 25 angelenkte Schwinge 58 wirkt. Die Schwinge 58 ist der Einfachheit halber in Richtung der Längsachse 29 verlaufend dargestellt. Vorteilhafter ist es jedoch, die Schwinge in Richtung der Querachse verlaufen zu lassen. Sie kann dann im Verriegelungsfall auftretende Kräfte in Richtung der Querachse problemlos aufnehmen. Die Verwendung der Schwinge hat weiterhin den Vorteil, daß die Kolben-Zylinder-Anordnung 57 nicht mehr den vollen Hub zum Verfahren eines Zapfens 55 zum Einfahren in die Aufnahmeeinrichtung 36 aufbringen muß, sondern daß aufgrund der Hebelwirkung der Schwinge 58 ein geringerer Hub ausreicht.

Fig. 13 stellt schematisch den vorderen Teil eines Sattelzuges 20 dar, bei dem eine Verriegelungs/Belastungs-Enrichtung wiederum so ausgebildet ist, daß mit ihrer Hilfe die angetriebenen Hinterräder 33 des Zuges einstellbar belastet werden können, wobei aber im Gegensatz zur Ausführungsform gemäß den Fig. 2 - 5 nunmehr die Einrichtung 35 direkt anschließend ans Fahrerhaus 54 eingebaut ist. Direkt hinter dem Fahrerhaus 54 erhebt sich vom Zugmaschinen-Fahrgestell 25 ein Trägerteil 59, an dem

7

unten ein Schwenkarm 37 und oben eine Verstelleinrichtung mit Luftbälgen 38 angelenkt ist. Das andere Ende der Luftbalg-Anordnung greift nahe dem vorderen Ende des Schwenkarms 37 an diesem an. Das freie Ende des Schwenkarmes 37 trägt als Eingriffsglied 39 eine Rolle. Dieses Eingriffsglied 39 greift in die Aufnahmeaussparung einer Aufnahmeeinrichtung 36 ein, die am vorderen Ende des Auflieger-Fahrgestelles 26 montiert ist.

Bei der Ansteuerung der Belastungseinrichtungen handelt es sich um übliche Ansteuerungen für Stellglieder, seien sie elektromotorisch betätigt oder seien es hydraulische Stellglieder oder seien es Luftbälge. Es ist von Vorteil, im Fahrerhaus eine Betätigungseinrichtung anzubringen, durch deren Betätigen die Belastung eingestellt werden kann. Die Belastung kann aber statt von Hand auch durch eine Belastungs-Steuereinrichtung erfolgen, der z. B. die von der Belastungseinrichtung auszuübende Kraft in Abhängigkeit vom Beladungszustand vorgegeben wird. Das Ermitteln des Beladungszustandes von Lastfahrzeugen zum automatischen Einstellen der Bremskraft abhängig vom Gesamtgewicht ist altbekannt. Es ist sinnvoll, auch die durch die Belastungseinrichtung zwischen den beiden Fahrgestellen 25 und 26 ausgeübte Kraft abhängig vom Gesamtgewicht einzustellen. Bei geringer Ladung oder gar im unbeladenen Zustand sollte die zwischen beiden Fahrgestellen wirkende Kraft gering sein, damit der Auflieger 22 bei Bodenunebenheiten auch im verriegelten Zustand noch leicht um die Querachse 30 um die Zugmaschine 21 schwingen kann. Ist die Zuladung groß, ist dieses Hin- und Herschwenken zum Ausgleich von Bodenunebenheiten auch bei großer von der Belastungseinrichtung ausgeübter Kraft noch möglich.

Wie oben erläutert, ist es von besonderem Vorteil, die Belastungs-Einrichtung so auszugestalten, daß die von ihr ausgeübte Kraft in einem breiten Wertebereich einstellbar ist, z. B. unter Berücksichtigung des Beladungszustandes des Zuges. Eine einfach aufgebaute Belastungs-Einrichtung kann aber auch so ausgebildet sein, daß sie nur in bezug auf zwei Grenzwerte einstellbar ist, nämlich keine Belastung einerseits und Belastung mit einem einzigen vorgegebenen Wert andererseits. Eine derartige, nur mit zwei Werten einstellbare Belastungs-Einrichtung kann mit Hilfe einer Schraubenfeder gebildet sein, die beim Verriegeln des Zuges gespannt wird.

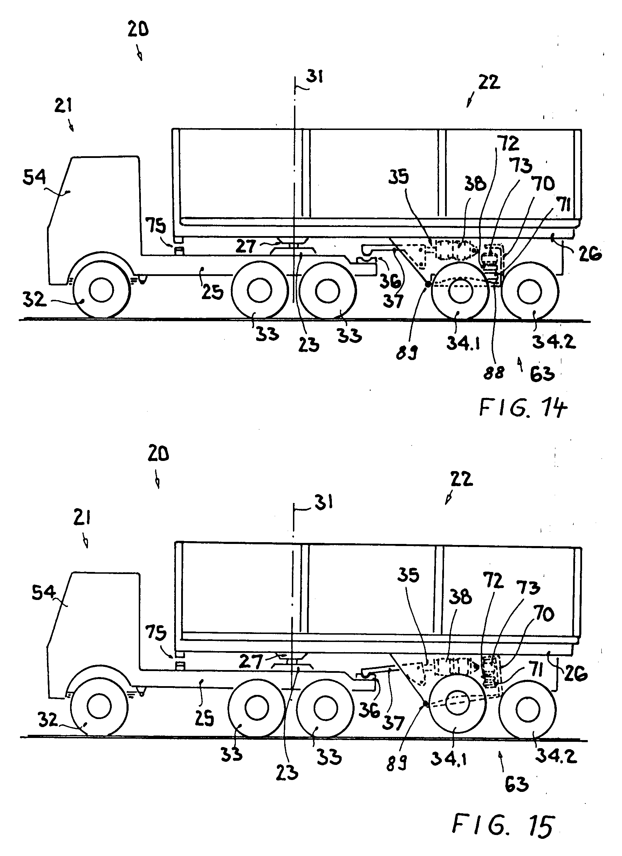

Die Fig. 14 und 15 zeigen einen Sattelzug 20 ähnlich dem der Fig. 1 und 2, jedoch mit liftbaren Aufliegerrädern 34.1.

Die Zugmaschine 21 weist eine Vorderachse mit zwei lenkbaren Vorderrädern 32 sowie zwei Hinterachsen mit nicht lenkbaren Hinterrädern 33 auf. Der Auflieger 22 ist zweiachsig ausgebildet, mit einer Liftachse 60 mit nicht lenkbaren, vom Boden abhebbaren Aufliegerrädern 34.1, und einer Lenkachse 61 mit lenkbaren Aufliegerrädern 34.2. Die Lenkachse 61 ist über eine Federungseinrichtung mit dem Auflieger-Fahrgestell 26 federnd verbunden. Die Federungseinrichtung verfügt über linke und rechte Schwingen 88, die an einem Ende jeweils über ein Gelenk 89 mit dem Fahrgestell 26 verbunden während das andere Ende über eine Luftfederung 62 mit dem Gestell 26 verbunden ist. Entsprechend ist die Liftachse 60 mit dem Auflieger-Fahrgestell 26 über eine Luftfederung mit Lifteinrichtung 63 verbunden, die weiter unten beschrieben wird. Die Federung kann statt durch eine Luftfederung z. B. auch durch eine Blattfederung gegeben sein.

Dadurch, daß die Liftachse 60 ungelenkt ist der gegenseitige Abstand 64 der Schwingen 88 an der Liftachse 60 erheblich größer als der gegenseitige Abstand 65 der Schwingen 88 an der Lenkachse 61. Dies führt dazu, daß ein Auflieger 22 mit einer Liftachse 60 und einer Lenkachse 61 beim Abkippen von Schüttgut stabiler steht als ein Auflieger mit zwei lenkbaren Aufliegerachsen.

Das Lenken der Lenkachse 61 erfolgt durch eine Lenkeinrichtung 66 mit einem Lenkaggregat 67, von dem jeweils eine Spurstange 68 zu einem Spurstangenhebel 69 an jeweils einem der lenkbaren Aufliegerräder 34.2 geht. Auf die genaue Ausbildung der Lenkeinrichtung 66 kommt es im vorliegenden Fall nicht an. In der Regel wird der Lenkwinkel derartig gelenkter Hinterräder elektronisch abhängig vom Lenkeinschlag der Vorderräder eingestellt.

Auch auf die genaue Ausgestaltung der Lifteinrichtung 63 kommt es nicht an. Es kann jede beliebige aus dem Stand der Technik bekannte Lifteinrichtung verwendet werden. Die Lifteinrichtung 63 ist in den Fig. 14 und 15 daher nur schematisch dargestellt. Die Lifteinrichtung 63 verfügt über einen U-förmigen Kragarm 70, an dessen einem Schenkel ein Ende einer Schwinge 88 befestigt ist. Außerdem ist am selben Schenkel ein Ende eines Federungsbalges 71 befestigt, dessen anderes Ende über ein fahrgestellfestes Flanschteil 72 fest mit dem Auflieger-Fahrgestell 26 verbunden ist. Mit demselben Flanschteil 72 ist ein Ende eines Liftbalges 73 verbunden; dessen anderes Ende am anderen Schenkel des Kragarms 70 angreift. In dem in Fig. 14 dargestellten Zustand des nicht verriegelten Sattelzuges 20, in welchem Zustand die Liftachse 60 abgesenkt ist, steht der Federungsbalg 71 unter Druck, während der Liftbalg 73 entlüftet ist. Dadurch übt der Federungsbalg 71 seine Federungsfunktion aus. In dem in Fig. 15 dargestellten Zustand bei verriegeltem Zug und angehobener Liftachse 60 ist dagegen der Federungsbalg 71 entlüftet, während dem Liftbalg 73 Druckluft zugeführt ist, wodurch er den Kragarm 70 und mit ihm die Schwinge 88 mit daran befestigter Liftachse 60 nach oben gedrückt hat.

EP 0 186 886 B1

Der gemäß den Fig. 14 und 15 beschriebene Sattelzug 20 kann verschiedene Schaltungen zum Betreiben der Verriegelungs/Belastungs-Einrichtung 35, der Lifteinrichtung 63 und der Lenkeinrichtung 66 aufweisen.

So ist es sinnvoll zunächst die Verriegelung vorzunehmen, dann die Verriegelungs/Belastungs-Einrichtung zu betätigen, schließlich die Räder 34.1 zu liften und nach derem Abheben die Lenkachse 61 zu entriegeln. Durch diese Folge ist gewährleistet, daß die Lenkachse 61 nicht kurzfristig dadurch überlastet werden kann, daß die Liftachse 60 bereits angehoben wird, bevor die Verriegelungs/Belastungs-Einrichtung 35 einen wesentlichen Anteil der Last des Aufliegers auf die Zugmaschine übertragen hat. Außerdem ist es vermieden, daß auf die lenkbaren Aufliegerräder 34.2 Lenkkräfte ausgeübt werden, bevor die Liftachse 60 angehoben ist.

Es ist von Vorteil, die Schaltung zum Ansteuern der genannten Vorrichtungen so auszugestalten, daß beim Aufheben der Lastverteilung und der Verriegelung die Ansteuerung in umgekehrter Reihenfolge erfolgt wie oben.

Die Folgeschaltungen können elektrisch, mechanisch oder pneumatisch/hydraulisch ausgebildet sein. Pneumatisch/hydraulische Folgeschaltungen sind durch Wahl unterschiedlich großer Ventile an den Vorrichtungen möglich. So seien z. B. die Einlaßventile an der Belastungs-Einrichtung 35, der Lifteinrichtung 63 und der Lenkeinrichtung 66 in der genannten Reihenfolge zunehmend kleiner, die Auslaßventile aber zunehmend grösser. Dadurch ergibt sich bei gleichzeitiger Druckbeaufschlagung aller Ventile die oben angegebene Folge.

Sind die Verriegelungs-Einrichtung und die Belastungs-Einrichtung getrennt voneinander ausgeführt, führt dies zu weiteren Variationsmöglichkeiten bei Folgeschaltungen. Geringere Variationsmöglichkeiten ergeben sich dann, wenn keine Belastungseinrichtung 35 zwischen den Fahrgestellen vorliegt, sondern das Belasten der Hinterräder der Zugmaschine allein durch Abheben der Räder 34.1 der Liftachse 60 vom Untergrund erfolgt.

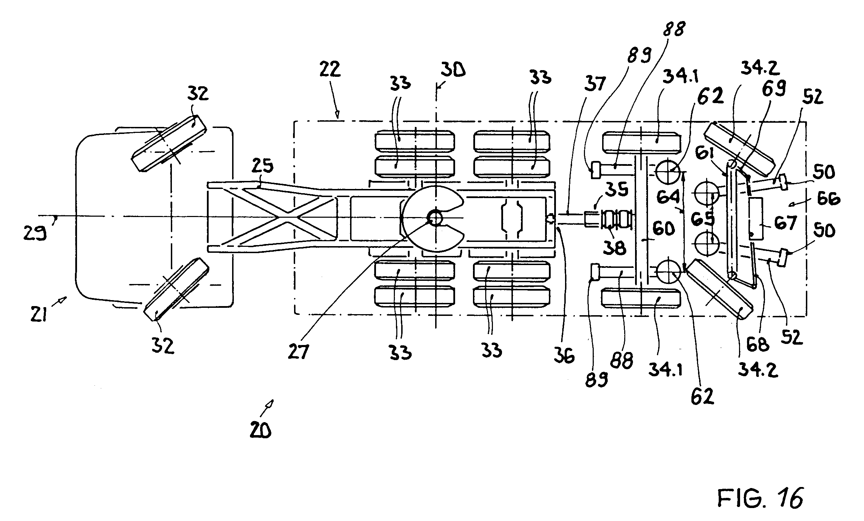

Alle anhand der Figuren 14 bis 16 beschriebenen Beispiele betreffen Ausführungsformen mit einer Liftachse als Grenzfall einer entlastbaren Achse und mit einer Belastungseinrichtung zwischen den Fahrgestellen, die als kombinierte Verriegelungs/Belastungs-Einrichtung ausgebildet ist. Darüberhinaus betreffen die Ausführungsbeispiele 5-Achs-Züge.

Insbesondere bei 4-Achs-Zügen ist es nicht erforderlich, daß am Auflieger eine Lenkachse vorliegt. Verfügt nämlich die Zugmaschine über eine lenkbare Vorderachse und eine lenkbare Hinterachse, so genügt es auch beim Vorliegen einer Starrachse als hinterer Aufliegerachse, die vordere Aufliegerachse zu liften, oder auch nur teilzuentlasten, um gute Manövrierbarkeit zu erzielen.

Auf die Belastungseinrichtung zwischen den Fahrgestellen kann verzichtet werden, wenn der Zug so aufgebaut ist, daß auch beim Entlasten der einen Aufliegerachse keine Überlastungsgefahr für die andere(n) nicht entlastbare(n) Aufliegerachse(n) besteht. Von der maximal zulässigen Achslast dieser nicht entlastbaren Achse(n) hängt es auch ab, ob die entlastbare(n) Achse(n) als Liftachse(n) ausgebildet sein kann (können), was, wie eingangs erläutert, mehrere Vorteile mit sich bringt.

Obige Beispiele betreffen Ausführungsformen, bei denen die Verriegelungs-Einrichtung während der Fahrt wahlweise ein- und ausschaltbar ist. Dies ist besonders bei 5-Achs-Zügen sinnvoll. Bei 4-Achs-Zügen ist es aber auch sinnvoll mit dauernd wirkender Verriegelungs-Einrichtung zu fahren. Diese wird dann nur beim Zusammenkuppeln betätigt und bleibt dann dauernd in Eingriff. Erst beim Abkuppeln wird auch die Verriegelung wieder aufgehoben.

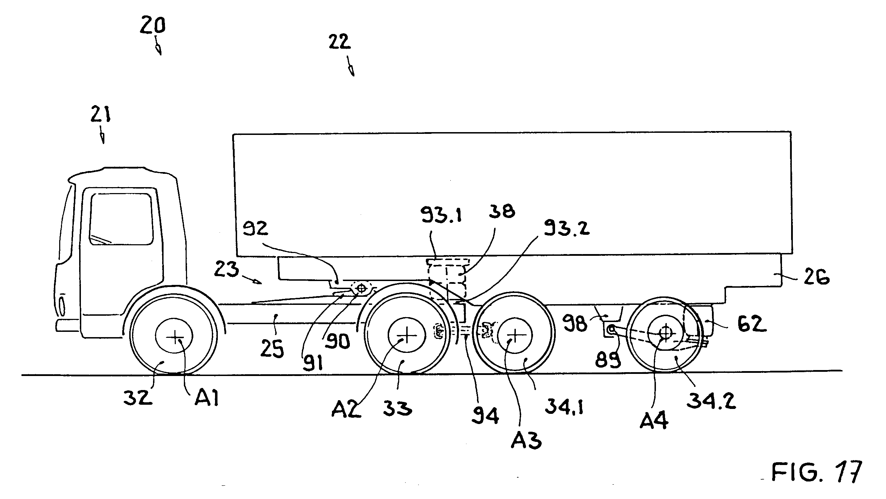

Die in den Figuren 17 bis 19 dargestellen 4-Achs-Sattelzüge 20 weisen jeweils eine Zugmaschine 21 mit lenkbaren Vorderrädern 32 sowie eine Hinterachse mit angetriebenen Hinterrädern 33 auf. Das Auflieger-Fahrgestell 26 weist jeweils eine angetriebene vordere Achse 34.1 und eine entlastbare hintere Achse 34.2 auf.

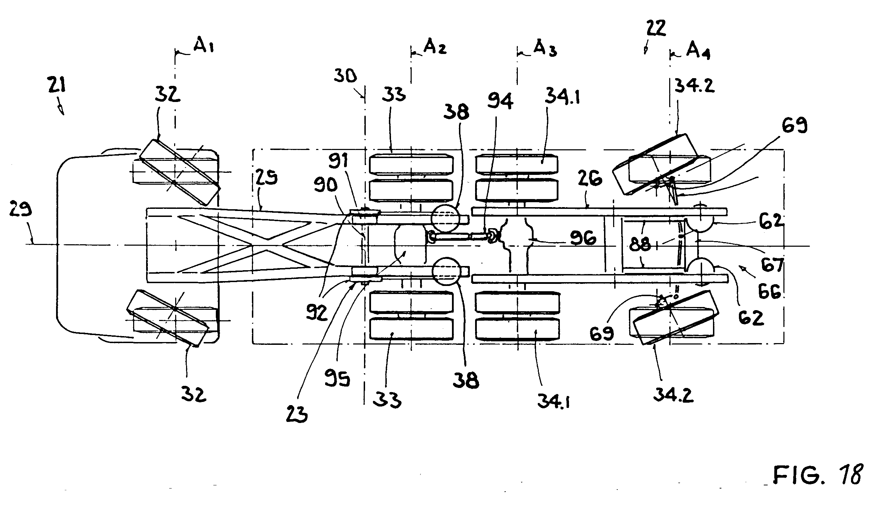

Beim Zug gemäß den Fig. 17 und 18 ist die Kupplung 23 durch eine Kupplungsachse 90 gebildet, die durch Bohrungen in Zugmaschinenflanschen 91 und Aufliegerflanschen 92 geschoben ist. Die Flansche 91 und 92 sind an den Stellen des Zugmaschinen-Fahrgestells 25 bzw. des Auflieger-Fahrgestells 26 angeordnet, an denen sich bei Sattelzügen üblicherweise die Kupplungsteile befinden.

Durch das Kuppeln mit Hilfe der Kupplungsachse 90 ist gewährleistet, daß der Auflieger 22 um eine rechtwinklig zur Längsachse 29 des Zuges 20 liegende Querachse 30 in bezug auf die Zugmaschine 21 schwenkbar ist. Ein Verschwenken um eine rechtwinklig zur Längsachse 29 und zur Querachse 30 stehende Hochachse ist jedoch nicht möglich.

Zwei die Belastungseinrichtung bildende Luftbälge 38 sind mit dem Auflieger-Fahrgestell 26 über eine obere Befestigungsplatte 93.1 fest und mit dem Zugmaschinen-Fahrgestell 25 über eine untere Befestigungsplatte 93.2 lösbar verbunden. Jeder Luftbalg 38 greift am hinteren Ende des Zugmaschinen-Fahrgestells 25 an. Wenn er mit Druckluft versorgt wird, drückt er die beiden Fahrgestelle 25 und 26 hinter

9

der Kupplung 23 auseinander, wodurch die Achsen 34.1 und 34.2 des Aufliegers 22 entlastet, die Hinterräder 33 der Zugmaschine 21 jedoch belastet werden.

Außer über die Kupplung 23 und den Luftbalg 38 ist der Auflieger 22 mit der Zugmaschine 21 noch über eine kuppelbare Antriebsstange 94 verbunden, die zwischen einem Differential 95 an der Hinterachse der Zugmaschine 21 und einem Differential 96 an der angetriebenen Achse 34.1 am Auflieger 22 verläuft.

Die entlastbare Achse 34.2 am Auflieger 22 ist über eine übliche entlastbare Achsaufhängung 97 mit dem Auflieger-Fahrgestell 26 verbunden. Die entlastbare Achsaufhängung 97 weist einen Lagerbock 98, eine Schwinge 88 und einen Luftfederungsbalg 62 auf. Die Schwinge 88 ist mit dem Lagerbock 98 über ein Gelenk 89 an einer Seite verbunden, während sie an der entgegengesetzten Seite über den Luftfederungsbalg 62 mit dem Auflieger-Fahrgestell 26 in Verbindung steht. Durch teilweises oder ganzes Entlüften des Luftfederungsbalges 62 ist die Achse 34.2 entlastbar.

Bei der in den Fig. 17 und 18 dargestellten Ausführungsform ist die hinterste Achse 34.2 des Aufliegers nicht nur entlastbar, sondern sie ist auch lenkbar. Dazu liegt eine Lenkeinrichtung 66 mit einem Lenkaggregat 67, einer Spurstange 68 und zwei Spurstangenhebeln 69 vor.

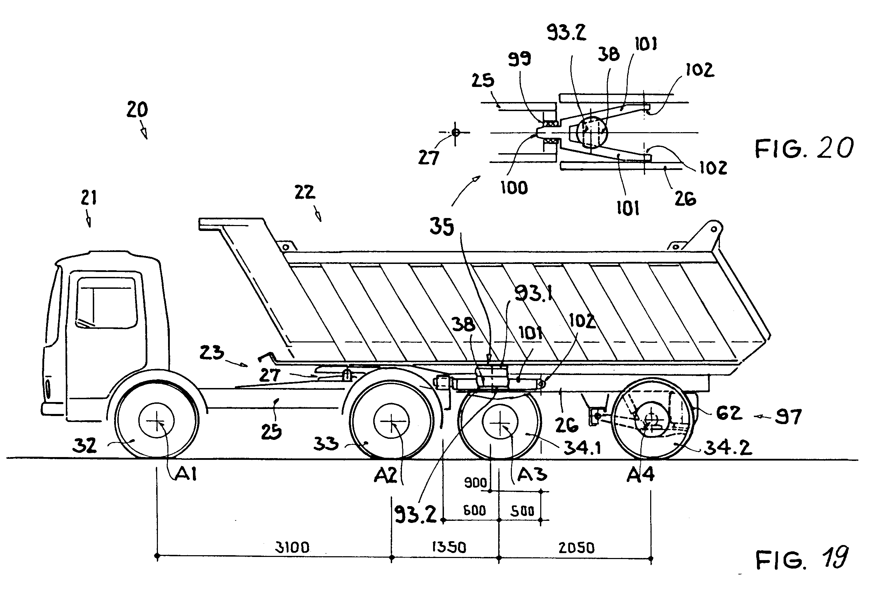

Bevor die Wirkungsweise des bisher beschriebenen Aufbaus gemäß den Fig. 17 und 18 näher erläutert wird, wird zunächst die Ausführungsform gemäß den Fig. 19 und 20 näher erläutert.

Bei der Ausführungsform gemäß den Fig. 19 und 20 ist das Auflieger-Fahrgestell 26 mit dem Zugmaschinen-Fahrgestell 25 über eine Kupplung mit einem Königszapfen 27 verbunden. Durch eine Verriegelungs/Belastungs-Einrichtung 35 ist ein wahlweises Verriegeln während der Fahrt, oder auch ein festes Verriegeln beim Zusammenkuppeln möglich. Verdrehungen um die Hochachse sind im wesentlichen unterbunden. Derjenige Teil der Verriegelungs/Belastungs-Einrichtung 35, der am Zugmaschinen-Fahrgestell 25 vorhanden ist, weist zwei Gummianschläge 99 auf die in Querrichtung voneinander beabstandet am hinteren Ende des genannten Fahrgestells 25 angeordnet sind. Der restliche Teil der Verriegelungs/Belastungs-Einrichtung 35 ist am Auflieger-Fahrgestell 26 befestigt. Er weist eine Schwinge mit einem Verriegelungszapfen 100 auf, der über zwei Führungsarme 101 mit zwei Schwenklagern 102 verbunden ist, von denen jeweils eins links bzw. rechts unten am Auflieger-Fahrgestell 26 angebracht ist. Beim Zusammenkuppeln der beiden Fahrgestelle 25 und 26 fährt der Verriegelungszapfen 100 in den Abstandsraum zwischen den beiden Gummianschlägen 99 ein, wodurch gewährleistet ist, daß die beiden Fahrgestelle nur noch um den Winkel um die Hochachse verschwenkbar sind, um den ein Verschwenken innerhalb der Grenzen möglich ist, die durch die Elastizität der Gummianschläge 99 gegeben sind. Werden in diesem verriegelten Zustand ein Luftbalg 38, der die Führungsarme 101 mit der Unterseite des Auflieger-Fahrgestells 26 verbindet mit Druckluft versorgt, drückt der Zapfen 100 nach unten auf das Zugmaschinen-Fahrgestell 25, wodurch dieses hinten belastet wird, was zu einer Belastung der Hinterräder 33 und einer Entlastung der Räder der angetriebenen Achse 34.1 führt. Wird der Luftbalg 38 dagegen ganz entlüftet, wird der Führungsarm 101 durch eine nicht dargestellte Feder so weit um das Schwenklager 102 verschwenkt, daß der Verriegelungszapfen 100 mit dem Gummianschlag 99 außer Eingriff kommt, wodurch die Zugmaschine 21 und der Auflieger 22 nicht mehr miteinander verriegelt sind.

Die Funktion der genannten Anordnungen wird nun anhand der folgenden Tabelle 1 näher erläutert. Diese führt folgende Werte an:

Spalte 1:  Kraft in to, mit der die Belastungseinrichtung BE (Luftbälge 38) die beiden Fahrgestelle 25 und 26 auseinanderdrückt;

Spalte 2:  Achslast in to der entlastbaren vierten Achse A4 des Zuges (entlastbare Achse 34.2);

Spalten 3 bis 5:  Achslasten in to der ersten drei Achsen A1, A2 und A3 des Zuges, also der Vorderachse und der Hinterachse der Zugmaschine 21 sowie der angetriebenen Achse 34.1 des Aufliegers 22;

Spalte 6:  Traktionswert in %, also prozentualer Anteil der Achslasten der angetriebenen Achsen A2 und A3 an der Gesamtbelastung.

TABELLE 1

| | 1 | 2 | 3 | 4 | 5 | 6 |
|---|---|---|---|---|---|---|
| | BE | A4 | A1 | A2 | A3 | (A2+A3)/Ges. |
| a | 0 | 10 | 6 | 10 | 10 | 20/36 ≅ 56 % |
| b | 0 | 1 | 4,4 | 3 | 27,6 | 30,6/36 ≅ 85 % |
| c | 8 | 1 | 2,8 | 10,3 | 22 | 32,3/36 ≅ 90 % |
| d | 11 | 6,2 | 3,8 | 13 | 13 | 26,0/36 ≅ 72 % |

In Zeile a von Tabelle 1 ist der Fall angeführt, in dem die Belastungseinrichtung BE nicht betätigt ist und die entlastbare Achse A4 nicht entlastet ist. Der Traktionswert beträgt 56 %. Wird bei weiterhin nicht betätigter Belastungseinrichtung BE lediglich die entlastbare Achse A4 (34.2) angehoben, führt dies zu einer Erhöhung des Traktionswertes auf 85 %, was daher rührt, daß die angetriebene Achse A3 (34.1) am Auflieger 22 sehr stark belastet wird. Es ergibt sich jedoch ein außerordentlich hoher Unterschied in den Achslasten der angetriebenen Achsen A2 und A3, nämlich mit einem Verhältnis von mehr als 1:9.

Wird ausgehend von der Stellung gemäß der soeben beschriebenen Zeile b die Achslast von 1 to an der entlastbaren Achse A4 (34.2) beibehalten, jetzt aber zusätzlich die Belastungseinrichtung BE (Luftfederbalg 38) mit einer die Fahrgestelle 25 und 26 auseinanderdrückenden Belastung von 8 to betätigt, ergeben sich die Achslastwerte gemäß Zeile c mit dem Traktionswert von 90 %. Der Achslastunterschied an den angetriebenen Achsen A2 und A3 steht nur noch im Verhältnis von etwas über 1:2.

Soll der Unterschied der Achslasten an den angetriebenen Achsen weiter verringert werden, läßt sich dies dadurch erzielen, daß die entlastbare Achse A4 nicht bis auf 1 to wie bei den Beispielen gemäß den Zeilen b und c entlastet wird, sondern nur auf 5,5 to. Der Traktionswert beträgt dann 72 % und das Verhältnis der Achslasten an den angetriebenen Achsen A2 und A3 beträgt etwa 1:1.

Die angegebenen Werte gelten jeweils für die Abmessungen, wie sie in Fig. 3 in Millimetern angegeben sind.

Die dargestellten Ausführungsbeispiele betreffen Sattelzüge 20 mit jeweils vier Achsen. Für die Erfindung ist die Anzahl der Achsen jedoch unerheblich. Insbesondere ist es möglich, daß die Zugmaschine 21 mehrere angetriebene Hinterachsen aufweist, und daß der Auflieger 22 über mehr als nur eine nicht angetriebene, entlastbare Achse 34.2 verfügt. Auch ist es nicht zwingend, daß die angetriebenen Räder der Zugmaschine 21 deren Hinterräder 33 sind. Werden statt dessen die Vorderräder 32 angetrieben, hat dies zur Folge, daß die Belastungseinrichtung statt hinter der Kupplung 23 vor derselben anzuordnen ist, um beim Betätigen der Belastungseinrichtung die Vorderräder 32 belasten zu können. Bei Allradantrieb der Zugmaschine 21 hängt es von der Gesamtgeometrie des Zuges ab, wo die zwischen dem Zugmaschinen-Fahrgestell 25 und dem Auflieger-Fahrgestell 26 wirkende Belastungseinrichtung am zweckmäßigsten anzuordnen ist, um bei entlasteten, nicht angetriebenen Rädern des Aufliegers 22 zu einem hohen Traktionswert bei nicht zu großem Achslastunterschied der angetriebenen Achsen an der Zugmaschine 21 und am Auflieger 22 zu kommen.

Für die Erfindung ist es ebenfalls unerheblich, auf welche Weise der Antrieb der angetriebenen Achse 34.1 am Auflieger 22 erfolgt. Es ist jedoch zweckmäßig, den Antrieb mit einer Gleichlaufeinrichtung zu versehen, damit auf ungleichem Untergrund nicht ein Rad bereits durchdreht, während das andere noch festgreift. Dazu kann das Differential 96 an der angetriebenen Achse 34.1 als Sperrdifferential ausgebildet sein. Es ist aber auch möglich, die beiden Achsen getrennt voneinander mit jeweils einem hydraulischen Antrieb anzutreiben. Dann wird auch das gut greifende Rad noch angetrieben, während das auf besonders rutschigem Untergrund stehende Rad bereits durchdreht. Noch vorteilhafter ist es, die Antriebe mit einer Schlupfüberwachung auszugestalten, damit die angetriebenen Räder jeweils mit solcher Drehzahl angetrieben werden, daß kein Schlupf gegenüber nicht angetriebenen Rädern erfolgt.

Mögliche Achsüberlastungen beim Entlasten der Räder 34.2 können, wie bereits oben ausgehend vom Beispiel gemäß den Fig. 14 bis 16 durch eine Folgeschaltung vermieden werden, die dafür sorgt, daß das Entlasten der Räder 34.2 erst erfolgt, wenn die zwischen den Fahrgestellen wirkende Belastungseinrichtung 38 bzw. 97 einen Teil der Aufliegerlast auf das Zugmaschinen-Fahrgestell übertragen hat.

Weitere mögliche Ausgestaltungen der Erfindung werden nun anhand der Fig. 8 und 9 sowie anhand einer Tabelle 2 erläutert.

Handelt es sich bei den Sattelzügen 20 gemäß den Fig. 8 und 9 um solche mit einer Allrad-Zugmaschine 21, ist es sinnvoll, eine Kraft gemäß Fig. 8 mit einer Kraft gemäß Fig. 9 zu kombinieren. Z. B. kann eine hinter der Kupplung wirkende, die Fahrgestelle auseinanderdrückende Belastungseinrichtung zum Ausüben der Kraft 53.1 und eine zweite Belastungseinrichtung zum Ausüben der Kraft 53.3 vorhanden sein, welche zweite Belastungseinrichtung dann vor der Kupplung sitzt und die beiden Fahrgestelle auseinanderdrückt. Es können auch beide Belastungseinrichtungen in einer Baueinheit vereinigt z. B. in einer Doppel-Belastungseinrichtung, die hinter der Kupplung angeordnet ist und die eine erste Belastungseinrichtung aufweist, die die beiden Fahrgestelle von Zugmaschine 21 und Auflieger 22 voneinander wegdrückt, während die zweite Belastungseinrichtung, wenn sie eingeschaltet ist, die Fahrgestelle aufeinander zuzieht. Diese beiden Belastungseinrichtungen können zwar noch unabhängig voneinander betätigt werden, jedoch nicht mehr gleichzeitig, wie die Verriegelungs/Belastungseinrichtung 35 und die entlastbare Achsaufhängung 97 gemäß den Fig. 2 und 3, sondern nur noch hintereinander. Dadurch ist es möglich, wahlweise entweder die Hinterachse der Zugmaschine oder deren Vorderachse bzw. eine angetriebene Aufliegerachse erhöht zu belasten. Eine Lastverteilung, wie sie anhand der obenstehenden Tabelle erläutert wurde, ist nur in einem Umfang möglich, wie er durch die geometrischen Verhältnisse vorgegeben ist. So führt bei den Aufbauten gemäß den Fig. 5 und 6 ein Auseinanderdrücken der beiden Fahrgestelle vor der Kupplung zu einem Erhöhen der Belastung der Vorderräder 32 und einem Erniedrigen der Belastung der Hinterräder 33, jedoch immer nur in einem durch die geometrischen Abmessungen bedingten Verhältnis. Die Möglichkeit der Lastverteilung ist daher gegenüber einer Möglichkeit eingeschränkt, bei der durch eine unabhängig von der ersten Belastungseinrichtung betätigbare zweite Belastungeinrichtung die Kraft auf eine der beiden genannten Achsen weiter erhöht oder erniedrigt werden kann, wie bei den Ausführungsbeispielen gemäß den Fig. 12 bis 19 und einem Ausführungsbeispiel wie es nun erläutert wird.

Die folgende Tabelle 2 ist ähnlich der oben erläuterten aufgebaut. Die Tabelle 2 gilt für ein Fahrzeug mit Allrad-Zugmaschine und entlastbarer, im Grenzfall liftbarer vorderer Aufliegerachse A3. Es liege eine Verriegelungs/Belastungseinrichtung 35 gemäß Fig. 19 vor.

TABELLE 2

|   | A1 | A2 | A3 | A4 | Ges. | (A1 + A2)/Ges. |
|---|---|---|---|---|---|---|
| a | 7,5 | 8,5 | 10,0 | 10,0 | 36,0 | 16/36 ≙ 45 % |
| b | 8,5 | 12,5 | 0 | 15,0 | 36,0 | 21/36 ≙ 58,3 % |
| c | 4,2 | 14,8 | 8,5 | 8,5 | 36,0 | 19/36 ≙ 52,7 % |
| d | 8,0 | 13,0 | 2,0 | 13,0 | 36,0 | 21/36 ≙ 58,3 % |

In Zeile a von Tabelle 2 ist der Fall angeführt, in dem weder die Verriegelungs/Belastungseinrichtung 35 noch die Entlastungseinrichtung für die liftbare Achse A3 betätigt sind. Der Traktionswert beträgt 45 %. Wird gemäß Zeile b die Achse A3 geliftet, wird die Zugmaschinen-Vorderachse A1 mit 8,5 to und die Hinterachse mit 12,5 to belastet, was zu einem Traktionswert von 58,3 % führt.

Im Unterschied zum Ausführungsbeispiel gemäß Tabelle 1 ist folgendes zu beachten: Der Sattelzug gemäß Tabelle 1 war ein solcher, bei dem von Doppelbereifung an den angetriebenen Achsen A2 und A3 ausgegangen war. Derartige Achsen sind in der Regel für eine Belastung von 13 to ausgelegt. Demgegenüber ist der für Tabelle 2 vorausgesetzte Sattelzug ein solcher mit einer angetriebenen Vorderachse A1 mit Einfachbereifung und einer angetriebenen Hinterachse A2 mit Zwillingsbereifung. Derartige Achsen sind in der Regel für ein Maximalgewicht von 8 to ausgelegt. Während es also beim Sattelzug gemäß Tabelle 1 angestrebt ist, die Last so zu verteilen, daß auf den angetriebenen Achsen A3 und A4 jeweils 13 to lasten, ist es beim Zug gemäß Tabelle 2 angestrebt, die Achse A1 mit 8 to und Achse A2 mit 13 to zu belasten. Dieses Ziel ist allein durch das Liften von Achse A3 gemäß Zeile b nicht erzielt.

Wird gemäß Zeile c nur die zwischen den Fahrgestellen wirkende Belastungseinrichtung 35 betätigt, führt dies zu einer gemäß dem Zustand von Zeile a verringerten Belastung an der Vorderachse A1 und einer Überlastung an der Hinterachse A2. Durch das Betätigen beider Belastungseinrichtungen gemäß Zeile d lassen sich, wie gefordert, die Lasten so verteilen, daß beide Achsen mit ihrem jeweils zulässigen Maximalgewicht belastet werden, also die Achse A1 mit 8 to und die Achse A2 mit 13 to. Dies führt zu eine gegenüber dem Traktionswert gemäß Zeile a erheblich erhöhten Traktionswert von 58,3 %.

Mit Belastungseinrichtungen zwischen den Fahrgestellen wirkt vorteilhafterweise eine Dämpfungseinrichtung, z. B. ein Stoßdämpfer gegen Nickbewegungen um die Querachse zwischen Auflieger und Zugmaschine zusammen.

Auch mit einer gegebenenfalls vorhandenen Verriegelungseinrichtung kann eine Dämpfungseinrichtung,

EP 0 186 886 B1

also z. B. ein Stoßdämpfer, zusammenwirken, um Schwenkbewegungen in bezug auf die Hochachse zu dämpfen.

Falls eine Lenkachse vorliegt, kann diese eine zwangsgelenkte Achse oder eine Nachlaufachse sein.

**Patentansprüche**

1. Sattelzug (20) mit
   a) einer Zugmaschine (21),
   b1) einem Auflieger (22),
   c) einer Kupplung (23) zwischen Zugmaschine und Auflieger die ein gegenseitiges Verschwenken von Zugmaschine und Auflieger zumindest um eine Querachse (30) zuläßt, die rechtwinklig zur Längsachse (29) des Zuges und zu einer durch die Kupplung gehenden senkrechten Hochachse (31) steht,
   d1) einer Belastungseinrichtung, die an mindestens einer von der Kupplung in Fahrtrichtung entfernten Stelle elastisch zwischen dem Zugmaschinen-Fahrgestell (25) und dem Auflieger-Fahrgestell (26) angreift und dort eine einstellbare Kraft zum Einstellen der Belastung der Antriebsräder des Sattelzuges ausübt,
   **gekennzeichnet durch**
   e) eine Verriegelungseinrichtung zum gegenseitigen Verriegeln von Zugmaschine und Auflieger in bezug auf ein Verschwenken des Aufliegers um die Hochachse, welche Verriegelungseinrichtung jedoch die Beweglichkeit um die Querachse nicht einschränkt.

2. Sattelzug (20) mit,
   a) einer Zugmaschine (21),
   b) einem Auflieger (22),
   c) einer Kupplung (23) zwischen Zugmaschine und Auflieger, die ein gegenseitiges Verschwenken von Zugmaschine und Auflieger zumindest um eine Querachse (30) zuläßt, die rechtwinklig zur Längsachse (29) des Zuges und zu einer durch die Kupplung gehenden senkrechten Hochachse (31) steht,
   d) einer Belastungseinrichtung zum einstellbaren Belasten der Antriebsräder des Sattelzuges,
   **gekennzeichnet durch**
   b2) einen Auflieger mit mindestens zwei Achsen, von denen zumindest eine eine nicht entlastbare Achse (61) ist,
   d2) eine Belastungseinrichtung, welche dadurch gegeben ist, daß zumindest eine der restlichen Achsen des Aufliegers eine durch eine Entlastungseinrichtung (63) entlastbare Achse (60) ist, und
   e) eine Verriegelungseinrichtung zum gegenseitigen Verriegeln von Zugmaschine und Auflieger in bezug auf ein Verschwenken des Aufliegers um die Hochachse, welche Verriegelungseinrichtung jedoch die Beweglichkeit um die Querachse nicht einschränkt.

3. Sattelzug (20) nach Anspruch 2 gekennzeichnet durch
   d1) eine erste Belastungseinrichtung, die an mindestens einer von der Kupplung in Fahrtrichtung entfernten Stelle elastisch zwischen dem Zugmaschinen-Fahrgestell (25) und dem Auflieger-Fahrgestell (26) angreift und dort eine einstellbare Kraft zum Einstellen der Belastung der Antriebsräder des Sattelzuges ausübt.

4. Sattelzug (20) mit,
   a) einer Zugmaschine (21),
   b1) einem Auflieger (22),
   c) einer Kupplung (23) zwischen Zugmaschine und Auflieger, die ein gegenseitiges Verschwenken von Zugmaschine und Auflieger zumindest um eine Querachse (30) zuläßt, die rechtwinklig zur Längsachse (29) des Zuges und zu einer durch die Kupplung gehenden senkrechten Hochachse (31) steht,
   d) einer Belastungseinrichtung zum einstellbaren Belasten der Antriebsräder des Sattelzuges,
   **gekennzeichnet durch**
   f) mindestens zwei Antriebsachsen (A2, A3; A1, A2) und
   d3) mindestens zwei Belastungseinrichtungen (35, 97) zum Einstellen der Belastungen der Antriebsachsen,
   e) eine Verriegelungseinrichtung (35) zum gegenseitigen Verriegeln von Zugmaschine und Auflieger

13

in bezug auf ein Verschwenken des Aufliegers um die Hochachse, welche Verriegelungseinrichtung jedoch die Beweglichkeit um die Querachse nicht einschränkt.

**5.** Sattelzug (20) nach Anspruch 4 gekennzeichnet durch

d1) zumindest eine Belastungseinrichtung, die an mindestens einer von der Kupplung in Fahrtrichtung entfernten Stelle elastisch zwischen dem Zugmaschinen-Fahrgestell (25) und dem Auflieger-Fahrgestell (26) angreift und dort eine einstellbare Kraft zum Einstellen der Belastung der Antriebsräder des Sattelzuges ausübt.

**6.** Sattelzug (20) nach Anspruch 4 gekennzeichnet durch

b2) einen Auflieger mit mindestens zwei Achsen, von denen zumindest eine eine nicht entlastbare Achse (61) ist, und

d2) wobei zumindest eine Belastungseinrichtung vorhanden ist, welche dadurch gegeben ist, daß zumindest eine der restlichen Achsen des Aufliegers eine durch eine Entlastungseinrichtung (63) entlastbare Achse (60) ist.

**7.** Sattelzug nach Anspruch 4,

**dadurch gekennzeichnet**, daß mindestens eine der zwei Belastungseinrichtungen gemäß Merkmal d1 ausgebildet ist und mindestens eine weitere Belastungseinrichtung gemäß Merkmal d2 ausgebildet ist.

**8.** Sattelzug nach einem der Ansprüche 1, 2 oder 4 bis 7,

**dadurch gekennzeichnet**, daß die Verriegelungseinrichtung (35) folgende Teile aufweist:
- eine Aufnahmeeinrichtung (36), die hinten am Zugmaschinen-Fahrgestell (25) angebracht ist, und
- ein Verstellglied, das als pneumatisch betätigter, am Auflieger-Fahrgestell (26) angelenkter Schwenkarm (37) ausgebildet ist.

**9.** Sattelzug nach einem der Ansprüche 1, 2 oder 4 bis 8,

**dadurch gekennzeichnet**, daß die Verriegelungseinrichtung (35) so ausgebildet ist, daß sie bei einer vorgegebenen Maximalseitenkraft die Verriegelung freigibt.

**10.** Sattelzug nach einem der Ansprüche 1, 2 oder 4 bis 9,

**dadurch gekennzeichnet**, daß die Verriegelungseinrichtung (35) als während der Fahrt wahlweise ein- und ausschaltbare Einrichtung ausgebildet ist.

**11.** Sattelzug nach einem der Ansprüche 1, 2 oder 4 bis 10,

**dadurch gekennzeichnet**, daß die Belastungseinrichtung und die Verriegelungseinrichtung durch dieselben Bauteile als kombinierte Verriegelungs/Belastungs-Einrichtung (35) gebildet sind.

**12.** Sattelzug nach einem der Ansprüche 1 bis 11,

**dadurch gekennzeichnet**, daß im Fall eines mehrachsigen Aufliegers (22) zumindest eine Aufliegerachse eine Lenkachse (61) ist.

**13.** Sattelzug nach einem der Ansprüche 4 bis 12,

**dadurch gekennzeichnet**, daß die Belastungseinrichtungen (35, 97) unabhängig voneinander verstellbar sind.

**14.** Sattelzug nach einen der Ansprüche 4 bis 13,

**dadurch gekennzeichnet**, daß er soviele Belastungseinrichtungen (35, 97) wie Antriebsachsen (A2, A3) aufweist.

**15.** Sattelzug nach einem der Ansprüche 4 bis 14,

**dadurch gekennzeichnet**, daß
- zumindest die hinterste Zugmaschinenachse (A2) und die vorderste Aufliegerachse (A3) angetriebene Achsen sind,
- an der hintersten Aufliegerachse (A4) die Entlastungseinrichtung (97) angreift und
- die zwischen den Fahrgestellen wirkende erste Belastungseinrichtung (35) so angeordnet ist, daß sie in betätigtem Zustand die hinterste Zugmaschinenachse belastet, die vorderste Zugmaschinenachse aber entlastet.

**16.** Sattelzug nach einem der Ansprüche 4 bis 14,
**dadurch gekennzeichnet**, daß

- zumindest die vorderste Zugmaschinenachse (A1) und die hinterste Zugmaschinenachse (A2) angetriebene Achsen sind,
- an der vordersten Aufliegerachse (A3) die Entlastungseinrichtung (97) angreift und
- die zwischen den Fahrgestellen wirkende erste Belastungseinrichtung (35) so angeordnet ist, daß sie in betätigtem Zustand die hinterste Zugmaschinenachse belastet, die vorderste Zugmaschinenachse aber entlastet.

**17.** Sattelzug nach einem der Ansprüche 2, 3 oder 6 bis 16,
**dadurch gekennzeichnet**, daß die Entlastungseinrichtung als Lifteinrichtung ausgebildet ist, zum Abheben der Räder der entlasteten Aufliegerachse(n) vom Boden.

## Claims

**1.** Tractor-semitrailer combination (20) having
a) a tractor (21),
b1) a semitrailer (22),
c) a coupling (23) between tractor and semitrailer, which coupling (23) permits mutual pivoting of tractor and semitrailer at least about a transverse axis (30) which is at right angles to the longitudinal axis (29) of the combination and to a vertical axis (31) passing perpendicularly through the coupling,
d1) a loading device which acts elastically between the tractor chassis (25) and the semitrailer chassis (26) at at least one location remote from the coupling in the direction of travel and exerts there an adjustable force for adjusting the loading of the drive wheels of the tractor-semitrailer combination,
characterised by
e) a locking device for the mutual locking of tractor and semitrailer with regard to pivoting of the semitrailer about the vertical axis, which locking device, however, does not restrict the mobility about the transverse axis.

**2.** Tractor-semitrailer combination (20) having
a) a tractor (21),
b) a semitrailer (22),
c) a coupling (23) between tractor and semitrailer, which coupling (23) permits mutual pivoting of tractor and semitrailer at least about a transverse axis (30) which is at right angles to the longitudinal axis (29) of the combination and to a vertical axis (31) passing perpendicularly through the coupling,
d) a loading device for the adjustable loading of the drive wheels of the tractor-semitrailer combination,
characterised by
b2) a semitrailer having at least two axles, of which at least one is a non-relievable axle (61),
d2) a loading device which is present owing to the fact that at least one of the remaining axles of the semitrailer is an axle (60) which can be relieved by a relieving device (63), and
e) a locking device for the mutual locking of tractor and semitrailer with regard to pivoting of the semitrailer about the vertical axis, which locking device, however, does not restrict the mobility about the transverse axis.

**3.** Tractor-semitrailer combination (20) according to Claim 2, characterised by
d1) a first loading device which acts elastically between the tractor chassis (25) and the semitrailer chassis (26) at at least one location remote from the coupling in the direction of travel and exerts there an adjustable force for adjusting the loading of the drive wheels of the tractor-semitrailer combination.

**4.** Tractor-semitrailer combination (20) having
a) a tractor (21),
b1) a semitrailer (22),
c) a coupling (23) between tractor and semitrailer, which coupling (23) permits mutual pivoting of tractor and semitrailer at least about a transverse axis (30) which is at right angles to the longitudinal axis (29) of the combination and to a vertical axis (31) passing perpendicularly through the coupling,

EP 0 186 886 B1

d) a loading device for the adjustable loading of the drive wheels of the tractor-semitrailer combination,

characterised by

f) at least two drive axles (A2, A3; A1, A2) and

d3) at least two loading devices (35, 97) for adjusting the loadings of the drive axles,

e) a locking device (35) for the mutual locking of tractor and semitrailer with regard to pivoting of the semitrailer about the vertical axis, which locking device, however, does not restrict the mobility about the transverse axis.

5. Tractor-semitrailer combination (20) according to Claim 4, characterised by

d1) there being at least one loading device which acts elastically between the tractor chassis (25) and the semitrailer chassis (26) at at least one location remote from the coupling in the direction of travel and exerts there an adjustable force for adjusting the loading of the drive wheels of the tractor-semitrailer combination.

6. Tractor-semitrailer combination (20) according to Claim 4, characterised by

b2) a semitrailer having at least two axles, of which at least one is a non-relievable axle (61),

d2) there being at least one loading device, owing to the fact that at least one of the remaining axles of the semitrailer is an axle (60) which can be relieved by a relieving device (63).

7. Tractor-semitrailer combination according to Claim 4, characterised in that at least one of the two loading devices is designed according to feature d1, and at least one further loading device is designed according to feature d2.

8. Tractor-semitrailer combination according to Claims 1, 2 or 4 to 7, characterised in that the locking device (35) has the following parts:

- a locating device (36) which is attached at the rear to the tractor chassis (25), and
- an adjusting member which is designed as a pneumatically operated swivel arm (37) linked to the semitrailer chassis (26).

9. Tractor-semitrailer combination according to one of Claims 1, 2 or 4 to 8, characterised in that the locking device (35) is designed in such a way that it releases the locking at a predetermined maximum lateral force.

10. Tractor-semitrailer combination according to one of Claims 1, 2 or 4 to 9, characterised in that the locking device (35) is designed as a device which can alternatively be engaged or disengaged during travel.

11. Tractor-semitrailer combination according to one of Claims 1, 2 or 4 to 10, characterised in that the loading device and the locking device are formed by the same components as a combined locking/loading device (35).

12. Tractor-semitrailer combination according to one of Claims 1 to 11, characterised in that, in the case of a multi-axle semitrailer (22), at least one semitrailer axle is a steering axle (61).

13. Tractor-semitrailer combination according to one of Claims 4 to 12, characterised in that the loading devices (35, 97) are adjustable independently of one another.

14. Tractor-semitrailer combination according to one of Claims 4 to 13, characterised in that it has as many loading devices (35, 97) as drive axles (A2, A3).

15. Tractor-semitrailer combination according to one of Claims 4 to 14, characterised in that

- at least the rearmost tractor axle (A2) and the frontmost semitrailer axle (A3) are driven axles,
- the relieving device (97) acts on the rearmost semitrailer axle (A4), and
- the first loading device (35) acting between the chassis is arranged in such a way that, in the operated state, it loads the rearmost tractor axle but relieves the frontmost axle.

16. Tractor-semitrailer combination according to one of Claims 4 to 14, characterised in that

16

- at least the frontmost tractor axle (A1) and the rearmost tractor axle (A2) are driven axles,
- the relieving device (97) acts on the frontmost semitrailer axle (A3), and
- the first loading device (35) acting between the chassis is arranged in such a way that, in the operated state, it loads the rearmost tractor axle but relieves the frontmost tractor axle.

17. Tractor-semitrailer combination according to one of Claims 2, 3 or 6 to 16, characterised in that the relieving device is designed as a lifting device for lifting the wheels of the relieved semitrailer axle(s) from the ground.

**Revendications**

1. Semi-remorque (20) avec:
   a) un tracteur (21)
   b1) une remorque (22)
   c) un accouplement (23) entre le tracteur et la remorque, qui permet un pivotement mutuel du tracteur et de la remorque au moins autour d'un axe transversal (30) qui est situé perpendiculairement à l'axe longitudinal (29) du véhicule et à un axe vertical de giration (31) traversant l'accouplement,
   d1) un dispositif de mise en charge qui en au moins un emplacement écarté de l'accouplement dans la direction de déplacement s'accroche de manière élastique entre le châssis (25) du tracteur et le châssis (26) de la remorque et qui en cet endroit exerce une force réglable en vue de régler la charge des roues motrices du semi-remorque,

   **caractérisé en ce que**
   e) un dispositif de verrouillage en vue du verrouillage mutuel du tracteur et de la remorque par rapport à un pivotement de la remorque autour de l'axe de giration, ce dispositif de verrouillage ne limitant cependant pas la mobilité autour de l'axe transversal.

2. Semi-remorque (20) avec:
   a) un tracteur (21)
   b) une remorque (22)
   c) un accouplement (23) entre le tracteur et la remorque, qui permet un pivotement mutuel du tracteur et de la remorque au moins autour d'un axe transversal (30) qui est situé perpendiculairement à l'axe longitudinal (29) du véhicule et à un axe vertical de giration (31) traversant l'accouplement.
   d) un dispositif de mise en charge en vue du réglage de la mise en charge des roues motrices du semi-remorque,

   **caractérisé par**
   b2) une remorque à au moins deux essieux dont un au moins est un essieu (61) qui ne peut être délesté,
   d2) un dispositif de mise en charge qui résulte de ce qu'au moins un des autres essieux de la remorque est un essieu (60) qui peut être délesté par un dispositif de délestage (63), et
   e) un dispositif de verrouillage en vue du verrouillage mutuel du tracteur et de la remorque par rapport à un pivotement de la remorque autour de l'axe de giration, ce dispositif de verrouillage ne limitant cependant pas la mobilité autour de l'axe transversal.

3. Semi-remorque (20) selon la revendication 2,
   **caractérisé par**
   d1) un premier dispositif de mise en charge qui en au moins un emplacement éloigné de l'accouplement dans la direction de déplacement s'accroche de manière élastique entre le châssis (25) du tracteur et le châssis (26) de la remorque et qui en cet endroit exerce une force réglable en vue de régler la charge des roues motrices du semi-remorque.

4. Semi-remorque (20) avec:
   a) un tracteur (21)
   b1) une remorque (22)
   c) un accouplement (23) entre le tracteur et la remorque, qui permet un pivotement mutuel du tracteur et de la remorque au moins autour d'un axe transversal (30) qui est situe perpendiculairement à l'axe longitudinal (29) du véhicule et à un axe vertical de giration (31) traversant l'accouple-

EP 0 186 886 B1

ment,
d) un dispositif de mise en charge en vue du réglage de la mise en charge des roues motrices du semi-remorque,

**caractérisé par**

f) au moins deux axes moteurs (A, A3; A1, A2) et

d3) au moins deux dispositifs de mise en charge (35, 97) en vue du réglage des charges des essieux moteurs,

e) un dispositif de verrouillage en vue du verrouillage mutuel du tracteur et de la remorque par rapport à un pivotement de la remorque autour de l'axe de giration, ce dispositif de verrouillage ne limitant cependant pas la mobilité autour de l'axe transversal.

5. Semi-remorque (20) selon la revendication 4,
**caractérisé par**

d1) au moins un dispositif de mise en charge qui en au moins un emplacement écarté de l'accouplement dans la direction de déplacement s'accroche de manière élastique entre le châssis (25) du tracteur et le châssis (26) de la remorque et qui en cet endroit exerce une force réglable en vue de régler la charge des roues motrices du semi-remorque.

6. Semi-remorque (20) selon la revendication 4,
**caractérisé par**

b2) une remorque à au moins deux essieux dont un au moins est un essieu (61) qui ne peut être délesté, tandis que

d2) il existe au moins un dispositif de mise en charge qui résulte de ce qu'au moins un des autres essieux de la remorque est un essieu (60) qui peut être déleste par un dispositif de délestage (63).

7. Semi-remorque selon la revendication 4, **caractérisé en ce qu'**au moins un des deux dispositifs de mise en charge est réalisé conformement à la caractéristique d1 et **en ce qu'**au moins un autre dispositif de mise en charge est réalise conformément à la caractéristique d2.

8. Semi-remorque selon l'une des revendications 1, 2 ou 4 à 7,
**caractérisé en ce que** le dispositif de verrouillage (35) présente les parties suivantes:
- un dispositif de reprise (36) installé à l'arrière du châssis (25) du tracteur et
- un membre de réglage qui est réalisé sous la forme d'un bras pivotant (37) articulé sur le châssis (26) de la remorque et actionnable pneumatiquement.

9. Semi-remorque selon l'une des revendications 1, 2 ou 4 à 8,
**caractérisé en ce que** le dispositif de verrouillage (35) est réalisé de telle manière qu'il libère le verrouillage lorsqu'apparait une force latérale maximale définie d'avance.

10. Semi-remorque selon l'une des revendications 1, 2 ou 4 à 9,
**caractérisé en ce que** le dispositif de verrouillage (35) estréalisé sous la forme d'une installation pouvant être branchée ou débranchée à volonté en cours de transport.

11. Semi-remorque selon l'une des revendications 1, 2 ou 4 à 10,
**caractérisé en ce que** le dispositif de mise en charge et le dispositif de verrouillage sont réalisés à partir des mêmes éléments constitutifs sous la forme d'un dispositif combiné de mise en charge et de verrouillage.

12. Semi-remorque selon l'une des revendications 1 à 11,
**caractérisé en ce que** dans le cas d'une remorque (22) à plusieurs essieux, au moins un des essieux de la remorque est un essieu directeur (61).

13. Semi-remorque selon l'une des revendications 4 à 12,
**caractérisé en ce que** les dispositifs de mise en charge (35, 97) sont réglables indépendamment l'un de l'autre.

14. Semi-remorque selon l'une des revendications 4 à 13,
**caractérisé en ce qu'**il présente autant de dispositifs de mise en charge (35, 97) qu'il compte

18

d'essieux moteurs (A2, A3).

15. Semi-remorque selon l'une des revendications 4 à 14,
**caractérisé en ce que**
- au moins l'essieu (A2) le plus en arrière du tracteur et l'essieu (A3) le plus en avant de la remorque sont des essieux moteurs,
- le dispositif de délestage (97) s'accroche sur l'essieu (AH) le plus en arrière de la remorque et
- le premier dispositif de mise en charge (35) agissant entre les châssis est installé de telle manière qu'en situation activée il met en charge l'essieu le plus en arrière du tracteur mais déleste l'essieu le plus en avant du tracteur.

16. Semi-remorque selon l'une des revendications 4 à 14,
**caractérisé en ce que**
- au moins l'essieu (A1) le plus en avant du tracteur et l'essieu (A2) le plus en arrière du tracteur sont des essieux moteurs,
- le dispositif de délestage s'accroche sur l'essieu (A3) le plus en avant de la remorque et
- le premier dispositif de mise en charge (35) agissant entre les châssis est installe de telle manière qu'en situation activée il met en charge l'essieu le plus en arrière du tracteur, mais déleste l'essieu le plus en avant du tracteur.

17. Semi-remorque selon l'une des revendications 2, 3 ou 6 à 16, **caractérisé en ce que** le dispositif de délestage est réalisé sous la forme d'un dispositif de levage en vue du relèvement au-dessus du sol des roues du ou des essieux délestés de la remorque.

EP 0 186 886 B1

Fig.1

Fig.8

Fig.9

Fig. 2

Fig.3

Fig.4

Fig.5

Fig.6

Fig.7

Fig. 10

Fig. 11

Fig. 12

Fig. 13

FIG. 14

FIG. 15

FIG. 16

EP 0 186 886 B1

FIG. 17

EP 0 186 886 B1

FIG. 18

FIG. 20

FIG. 19

EP 0 186 886 B1